Europäisches Patentamt

European Patent Office

Office européen des brevets

(19)

(11) Veröffentlichungsnummer : **0 599 831 B1**

(12) **EUROPÄISCHE PATENTSCHRIFT**

(45) Veröffentlichungstag der Patentschrift :
**05.04.95 Patentblatt 95/14**

(51) Int. Cl.⁶ : **H02M 7/529, H02M 7/5387, H02M 3/157**

(21) Anmeldenummer : **91914506.0**

(22) Anmeldetag : **22.08.91**

(86) Internationale Anmeldenummer :
**PCT/DE91/00669**

(87) Internationale Veröffentlichungsnummer :
**WO 93/04526 04.03.93 Gazette 93/06**

(54) **VERFAHREN UND VORRICHTUNG ZUR EINSTELLUNG VON MITTELWERTEN EINER AUS EINER GESCHALTETEN EINGANGSGRÖSSE ERZEUGTEN STELLGRÖSSE ENTSPRECHEND EINER KONTINUIERLICHEN SOLLSTELLGRÖSSE.**

(43) Veröffentlichungstag der Anmeldung :
**08.06.94 Patentblatt 94/23**

(45) Bekanntmachung des Hinweises auf die Patenterteilung :
**05.04.95 Patentblatt 95/14**

(84) Benannte Vertragsstaaten :
**AT BE CH DE FR GB IT LI**

(56) Entgegenhaltungen :
**DE-A- 2 746 578**
**DE-A- 2 757 053**
**US-A- 4 109 194**

(56) Entgegenhaltungen :
**US-A- 4 387 307**
**PATENT ABSTRACTS OF JAPAN vol. 10, no. 279 (E-439) 20. September 1986 ; & JP-A-61 098 163**

(73) Patentinhaber : **SIEMENS AKTIENGESELLSCHAFT**
**Wittelsbacherplatz 2**
**D-80333 München (DE)**

(72) Erfinder : **BRAUN, Michael**
**Wolfsleite 40**
**D-8552 Herzogenaurach (DE)**
Erfinder : **SCHIERLING, Hubert**
**Ahornweg 2d**
**D-8520 Erlangen (DE)**

EP 0 599 831 B1

EP 0 599 831 B1

**Beschreibung**

Die Erfindung bezieht sich auf ein Verfahren und eine Vorrichtung zur Einstellung von Mittelwerten einer aus einer geschalteten Eingangsgröße erzeugten Stellgröße entsprechend einer kontinuierlichen Sollstellgröße mittels eines Pulsmodulationsverfahrens, wobei in Abhängigkeit eines Schaltspiels, eines Zeitinkrements, der Sollstellgröße und eines Mittelwertes der Eingangsgröße Zahlenwerte berechnet werden, die mittels zweier Taktsignale jeweils in einen Puls gewandelt werden, mit deren Hilfe der Puls bzw. die Pulse der Stellgröße generiert wird bzw. werden.

In der elektrischen Stromrichter- und Antriebstechnik werden häufig kontinuierliche Spannungen bzw. Ströme durch gepulste Spannungen bzw. Ströme ersetzt. Die Pulsdauern bzw. Umschaltzeiten der Pulsflanken werden durch Modulationsverfahren so bestimmt, daß die kontinuierliche Spannung möglichst gut angenähert wird. Im Falle der dreiphasig sinusförmigen Sollspannung sind hier insbesondere das Unterschwingungsverfahren, die Raumzeigermodulation und vorberechnet optimierte Pulsmuster bekannt.

Diese Pulsverfahren gehen bei der Ermittlung von Schaltzeiten, insbesondere bei digitaler zeitdiskreter Realisierung, von zumindest abschnittsweise konstanter Eingangsgröße (Zwischenkreisspannung bzw. Zwischenkreisstrom) aus. Eventuelle Änderungen der Eingangsgröße während eines Pulsintervalls, insbesondere des gerade ablaufenden Pulsintervalls, werden nicht berücksichtigt. Damit bildet der vom Umrichter erzeugte Puls der Spannung bzw. des Stromes die anzunähernde Kurvenform der kontinuierlichen Spannung, meist ein- oder dreiphasige Sinusform, nur unzureichend ab.

Bisher wurde die Zwischenkreisspannung bei den Unterschwingungsverfahren in der Amplitude der Dreieckshilfsspannung berücksichtigt. Dadurch wurde die Pulsbreite durch die Eingangsgröße zum Schaltzeitpunkt mitbestimmt. Bei zeitlich veränderlicher Speisegröße ergaben sich aus dem Unterschied zwischen deren Momentan- und wirksamen Mittelwert Abweichungen der geschalteten Größe. Bei der Raumzeigermodulation wurde die Eingangsgröße spätestens in dem dem zu berechnenden vorangehenden Intervall gemessen und in die Pulsdauer als Mittelwert eingerechnet. Es ergaben sich Fehler aus der um mindestens ein Pulsintervall versetzten Berücksichtigung der Eingangsgröße sowie durch einen eventuell nicht konstanten Verlauf im zu berechnenden Pulsintervall. Bei Modulation mittels vorausberechnet optimierten Pulsmustern wurde die Eingangsgröße als Mittelwert eines dem mit Schaltbefehlen zu versehenden Zeitraum vorangehenden Zeitraums im Aussteuergrad berücksichtigt. Hier ergab sich derselbe Fehler wie bei der Raumzeigermodulation, jedoch aufgrund längerer benutzter Zeiträume in größerem Maße.

Aus der JP-OS 61-98 163 ist eine Steuereinrichtung für einen pulsweitenmodulierten Wechselrichter bekannt, womit in Abhängigkeit einer einstellbaren Soll-Frequenz Steuersignale für die Stromrichterventile erzeugt werden. Aus der eingestellten Soll-Frequenz wird ein Referenz-Drehspannungs-System gebildet. Diese Referenz-Spannungen werden mittels Komparatoren mit einer dreieckförmigen Hilfsspannung verglichen (Unterschwingungsverfahren). Diese Ausgangsspannungen der Komparatoren werden einer Ansteuerschaltung der Stromrichterventile des Wechselrichters zugeführt. Außerdem enthält diese Steuereinrichtung eine Recheneinheit, der ein Spannungsfunktionsgenerator vorgeschaltet ist, womit aus der Soll-Frequenz eine Spannung generiert wird. Der Recheneinheit wird außerdem eine ermittelte Zwischenkreis-Gleichspannung (Eingangsspannung des Wechselrichters) zugeführt. Diese Recheneinheit ermittelt in Abhängigkeit seiner Eingangsgrößen eine Referenzspannung, die umgekehrt proportional zu den Schwankungen der Zwischenkreis-Gleichspannung ist. Diese erzeugte Referenzspannung wird bei der Erstellung des Referenz-Drehspannungs-Systems mitverwendet. Mittels der Recheneinheit können Schwankungen in der Eingangs-Gleichspannung des Wechselrichters kompensiert werden. Mittels dieses Steuerverfahrens wird nicht bei der Generierung der pulsweitenmodulierten Signale die Schwankung der Eingangsspannung des Wechselrichters berücksichtigt, sondern bei der Erzeugung des Referenz-Drehspannungs-Systems.

Aus der DE 31 31 344 C2 ist ein Verfahren und eine Vorrichtung zum Verarbeiten von Spannungssollwerten zu Zündsignalen bekannt, die die Ventile eines mit vorgegebener Eingangsgleichspannung gespeisten Wechselrichters ansteuern. Dabei wird durch die Kombination der durch die Zündsignale jeweils gezündeten Ventile aus der Menge der diskreten Zeiger, die aus den entsprechend den Stromführungszuständen der Wechselrichterventile an den Wechselrichterausgängen möglichen Spannungen zusammengesetzt sind, ein diskreter Spannungsraumzeiger an den Wechselrichterausgängen bestimmt. Gemäß dem Verfahren werden zur quasikontinuierlichen Steuerung der Phasenspannungen den Spannungssollwerten entsprechende Steuersignale gebildet und es wird ein Laufzeitsignal generiert. Durch Vergleich des Laufzeitsignals mit den Steuersignalen wird ein Schaltsignal zum Abschalten der momentan angesteuerten Zündkombination gebildet. Außerdem werden für einen aus Sollwerten der Phasenspannungen zusammengesetzten quasikontinuierlich veränderlichen Spannungsraumzeiger die benachbarten diskreten Zeiger bestimmt. Jeweils bei einem Start des Laufzeitsignals werden als Steuersignale die Komponenten des Spannungsraumzeigers bezüglich diesen benachbarten Zeigern gebildet und nach dem Start des Laufzeitsignals werden die beiden die benachbarten diskreten

2

Zeiger bestimmenden Zündkombinationen jeweils für die durch die zugehörigen Komponenten gegebenen Verweilzeiten angesteuert. Durch dieses Raumzeigermodulationsverfahren kann ein in einer Zwischenlage zwischen zwei diskreten Zeigern vorgegebener Sollspannungs-Raumzeiger dadurch gesteuert werden, daß die beiden benachbarten diskreten Vektoren und ggf. der Nullzustand von vornherein ausgewählt und die Zünddauer (Verweilzeiten) für die entsprechenden Zündkombinationen so berechnet werden, daß im Mittel durch die vektorielle Addition dieser Zustände der Soll-Raumzeiger approximiert wird. Die Schaltfolge, durch die diese Zustände erzeugt werden, kann dann bereits vorher berechnet und optimiert werden. D.h., jeder Spannungs-Raumzeiger kann im Mittel über eine Periodendauer bzw. Pulsdauer approximiert werden, wobei die relativen Schaltzeiten der benachbarten Zeiger gemäß den in dieser Patentschrift angegebenen Formeln berechnet werden.

Aus der Zeitschrift "Antriebstechnik" 27, 1988, Nr.4, Seiten 38 bis 42, ist eine weitere Modulationseinrichtung bekannt, mit der das Raumzeigermodulationsverfahren verwirklicht wird. Diese Modulationseinrichtung besteht aus einem Mikrorechner, mehreren Registern, mehreren Komparatoren, einem Timer, mehreren Flip-Flops und einem Logik-Array. Der Mikrorechner ermittelt in einem ersten Schritt Betrag und Winkel des zu approximierenden Soll-Raumzeigers oder liest diese Werte von einem übergeordneten Regelsystem ein. Für die Berechnung der Zeiten bzw. den relativen Schaltzeiten wird wegen der Symmetrie des sechseckigen Modulationsraums lediglich der Modulo-60°-Anteil des Winkels verwendet. Welche Halbleiterschalter dann angesprochen werden müssen, ist im Logik-Array festgelegt. Gemäß diesem Aufsatz wird der Soll-Raumzeiger in zwei Perioden approximiert. Zu Beginn einer ersten Periode werden zunächst die bereits vorher berechneten sowie die Summe der Zeiten im Vergleichsregister einer Timer-Einheit geladen sowie die Ausgangs-Flip-Flops gesetzt. Das dritte Vergleichsregister enthält die Periodendauer bzw. bei einer freilaufenden Timer-Einheit entsprechende Offsetwerte. Sobald nun der Timer-Wert mit den Inhalten der Register übereinstimmt, werden die Flip-Flops zurückgesetzt. Im Logik-Array wird daraus und aus der Sektorkennung des Winkels dann die Schaltbefehle für die Halbleiterschalter generiert. Während dieser ersten Perioden werden bereits alle erforderlichen Berechnungen für die nächste Periode durchgeführt. Diese beginnt mit dem durch einen Komparator ausgelösten Interrupt, mit dem die Flip-Flops erneut gesetzt werden. In der Interrupt-Routine werden die aktuellen Zeiten in die Vergleichsregister geladen. Die nach Ablauf der Interrupt- und der Berechnungsroutine verbleibende Zeit steht für Steuer-, Regel- und Überwachungsfunktionen zur Verfügung.

Der Erfindung liegt nun die Aufgabe zugrunde, ein Verfahren und eine Vorrichtung zur Einstellung von Mittelwerten einer aus einer geschalteten Eingangsgröße erzeugten Stellgröße entsprechend einer kontinuierlichen Sollstellgröße anzugeben, wobei die geschaltete Eingangsgröße so in die Bestimmung der Schaltzeitpunkte online einzubeziehen ist, daß die Mittelwerte der geschalteten Größe den Mittelwerten der Sollgrößen in ein und demselben Intervall auch bei veränderlicher Eingangsgröße entsprechen.

Diese Aufgabe wird erfindungsgemäß dadurch gelöst, daß zur Bestimmung der Zahlenwerte, zu denen sich die Schaltzustände des Pulses bzw. der Pulse ändern, anstelle eines Zeitinkrements eine Einheits-Spannungszeitfläche verwendet wird, und daß zur Umsetzung dieser Zahlenwerte in einen Puls bzw. in Pulse das Taktsignal in Abhängigkeit einer Einheits-Spannungszeitfläche und einer Stellgrößenzeitfläche verändert wird.

Dadurch, daß einerseits zur Bestimmung der aktiven Pulszeiten eine Einheits-Spannungszeitfläche und andererseits zur Dekrementierung des ermittelten Zahlenwertes dieser aktiven Pulszeiten ein in Abhängigkeit der schwankenden Eingangsgröße des Stellgliedes veränderbares Taktsignal verwendet wird, stimmt die erzeugte Stellgröße im Mittelwert exakt mit dem geforderten Mittelwert der Sollstellgröße überein. D.h., Änderungen der Eingangsgröße des Stellgliedes bleiben ohne Auswirkung auf den Mittelwert der erzeugten Stellgröße, unabhängig davon, ob sie während der aktiven Pulszeit oder der Pulspause (passive Pulszeit) auftreten. So wird z.B. die wiederholte Austastung von vom Mittelwert der Eingangsgröße abweichenden Werten korrigiert und Aliasing-Effekte treten nicht auf.

Dieses erfindungsgemäße Verfahren kann bei einphasigen und dreiphasigen Pulsbreitensteuerungen unabhängig vom Modulationsverfahren (Raumzeiger-Modulation, vorberechnet optimierte Pulsmuster) angewendet werden, da bei der Dekrementierung von berechneten Zahlenwerten, die jeweils einer aktiven Pulszeit entsprechen, jeweils ein von einer veränderbaren Eingangsgröße des Stellgliedes erzeugtes Taktsignal verwendet wird. D.h., die Dauer der aktiven Zustände innerhalb eines Schaltspiels werden über eine erfindungsgemäße Pulsfolge von Einheits-Spannungszeitflächen bestimmt.

Bei einem vorteilhaften Verfahren ist die Einheits-Spannungszeitfläche einstellbar. Dadurch ist dieses Steuerverfahren an die Erfordernisse einer Verarbeitung bzw. übergeordneten Regelung anpaßbar. D.h., die Einheits-Spannungszeitfläche ist beispielsweise bei einer kleinen Schaltfrequenz des Stellgliedes größer als bei einer großen Schaltfrequenz. Durch die einstellbare Einheits-Spannungszeitfläche ist das erfindungsgemäße Steuerverfahren für alle beliebigen Anwendungen offen.

Der Aufbau einer erfindungsgemäßen Vorrichtung zur Durchführung des erfindungsgemäßen Verfahrens

EP 0 599 831 B1

für eine einphasige und eine dreiphasige Pulsbreitensteuerung ist den Ansprüchen 5 und 6 zu entnehmen. Eine vorteilhafte Ausgestaltung der Ansprüche 5 und 6 ist dem Anspruch 7 zu entnehmen.

Zur weiteren Erläuterung der Erfindung wird auf die Zeichnung Bezug genommen, in der Ausführungsbeispiele einer Vorrichtung zur Durchführung des erfindungsgemäßen Verfahrens schematisch veranschaulicht sind.

| | |
|---|---|
| Figur 1 | zeigt eine einfache einphasige Pulsbreitensteuerung herkömmlicher Art und in den |
| Figuren 2 bis 4 | sind die zugehörigen Pulse jeweils in einem Diagramm über der Zeit t dargestellt, |
| Figur 5 | zeigt eine einfache, einphasige Pulsbreitensteuerung herkömmlicher Art, wobei die aktive Pulszeit in der Mitte eines Schaltspiels liegt, die |
| Figuren 6 bis 9 | veranschaulichen die zugehörigen Pulse jeweils in einem Diagramm über der Zeit t, in der |
| Figur 10 | ist in einem Diagramm über der Zeit t eine schwankende Eingangsgröße eines Stellgliedes dargestellt, wobei in den |
| Figuren 11 und 12 | jeweils in einem Diagramm über der Zeit t eine Pulsfolge und eine erzeugte Stellgröße dargestellt sind, die |
| Figur 13 | zeigt eine einphasige erfindungsgemäße Pulsbreitensteuerung, die |
| Figur 14 | veranschaulicht ein elektrisches Ersatzschaltbild des erfindungsgemäßen Taktgenerators nach Figur 13 und die |
| Figur 15 | veranschaulicht eine vorteilhafte Ausgestaltung des Taktgenerators nach Figur 14, in den |
| Figuren 16 bzw. 17 | ist eine einphasige erfindungsgemäße Puls breitensteuerung mit mittiger aktiver Pulszeit dargestellt, wobei der Taktgenerator gemäß Figur 14 bzw. 15 verwendet ist, die |
| Figur 18 | zeigt eine dreiphasige Pulsbreitensteuerung herkömmlicher Art und in den |
| Figuren 19 bis 26 | sind die zugehörigen Pulse jeweils in einem Diagramm über der Zeit t dargestellt, die |
| Figur 27 | zeigt eine dreiphasige Pulsbreitensteuerung herkömmlicher Art mit einer passiven Pulszeit zu Beginn eines Schaltspiels und in den |
| Figuren 28 bis 36 | sind die zugehörigen Pulse jeweils in einem Diagramm über der Zeit t dargestellt, in |
| Figur 37 | ist eine erfindungsgemäße dreiphasige Pulsbreitensteuerung dargestellt und in den |
| Figuren 38 bis 46 | sind die zugehörigen Pulse in einem Diagramm über der Zeit t dargestellt, die |
| Figur 47 | zeigt eine weitere dreiphasige Pulsbreitensteuerung herkömmlicher Art, in der |
| Figur 48 | ist eine weitere erfindungsgemäße dreiphasige Pulsbreitensteuerung veranschaulicht, wobei in den |
| Figuren 49 bis 55 | die zugehörigen Pulse jeweils in einem Diagramm über der Zeit t dargestellt sind, in der |
| Figur 56 | ist eine weitere erfindungsgemäße dreiphasige Pulsbreitensteuerung für beliebige Pulsmuster veranschaulicht, wobei in den |
| Figuren 57 bis 63 | die zugehörigen Pulse jeweils in einem Diagramm über der Zeit t dargestellt sind. |

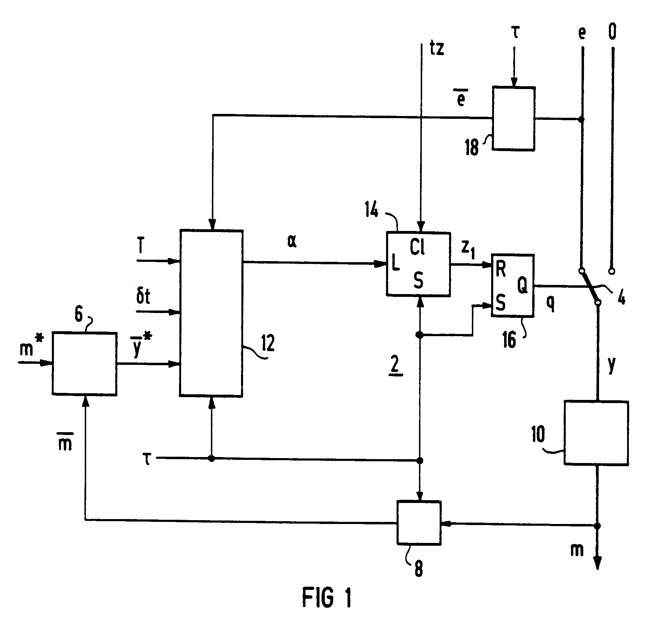

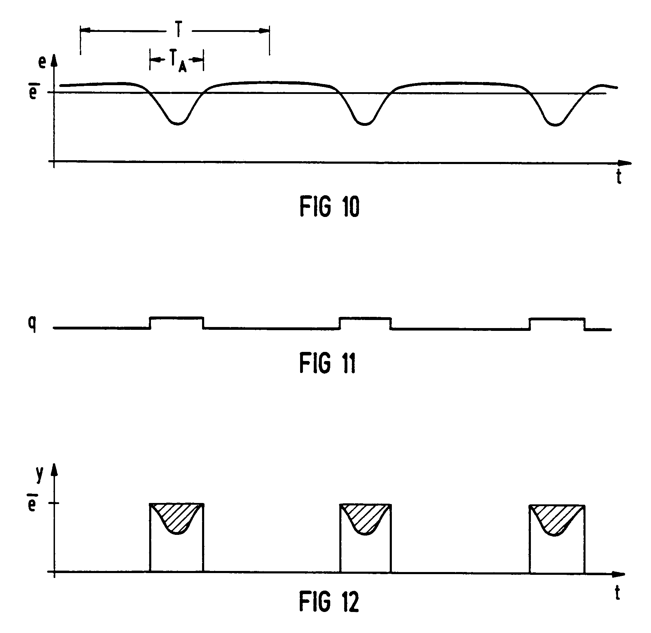

Das Blockschaltbild, dargestellt in der Figur 1, zeigt eine einfache Pulsbreitensteuerung 2 herkömmlicher Art, ein Stellglied 4 und einen Regler 6, der über einen Meßglied 8 mit einem Ausgang einer Regelstrecke 10 verbunden ist. Der Regler 6 gehört zu einer nicht näher dargestellten Regelung. Am Reglereingang steht ein Sollwert $m^*$ einer Regelgröße m an, die mittels der Regelstrecke 10 geregelt werden soll. Das Stellglied 4 weist eingangsseitig eine Eingangsgröße e auf, die in der Figur 10 in einem Diagramm über der Zeit t dargestellt ist. Als Stellglied 4 kann ein Pulsumrichter oder ein Wechselrichter vorgesehen sein.

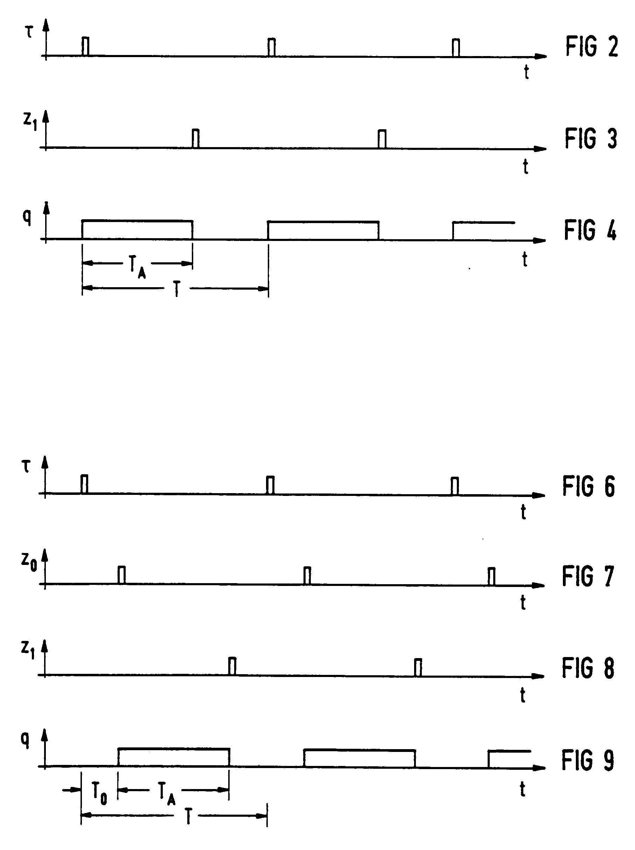

Die Pulsbreitensteuerung 2, auch als Modulator oder Steuersatz bezeichnet, besteht aus einer Recheneinheit 12, einem Schaltwerk und einer Meßeinrichtung 18. Das Schaltwerk enthält eine Zählereinheit 14, beispielsweise ein Rückwärtszähler 14, und ein Flip-Flop 16. Der Recheneinheit 12 und der Meßeinrichtung 18 wird jeweils ein Taktsignal $\pi$ zugeführt, das die Dauer eines Schaltspiels T angibt. Dieses Taktsignal $\pi$ ist in einem Diagramm über der Zeit t in der Figur 2 näher dargestellt. Der Recheneinheit 12 wird die Dauer eines Schaltspiels T und ein Zeitinkrement $\delta$ t als Zahlenwert zugeführt. Außerdem ist der Ausgang der Meßeinrichtung 18 mit der Recheneinheit 12 verbunden, wobei am Eingang der Meßeinrichtung 18 die Eingangsgröße e des Stellgliedes 4 ansteht. Als Meßeinrichtung 18 und als Meßglied 8 kann jeweils eine integrierende Istwerterfassungs-Einrichtung vorgesehen sein. Am Ausgang der Meßeinrichtung 18 steht der pro Schaltspiel T ermittelte Mittelwert $\bar{e}$ der Eingangsgröße e an. Am Ausgang des Meßgliedes 8 steht demnach der Mittelwert $\bar{m}$ der Regelgröße m an. Der Recheneinheit 12 wird ferner vom Regler 6 eine Sollstellgröße $y^*$ bzw. bezogen auf ein Schaltspiel T der Mittelwert einer Sollstellgröße $\bar{y}^*$ zugeführt, die in Abhängigkeit des Sollwertes $m^*$ und des Mittelwertes $\bar{m}$ der Regelgröße m mittels des Reglers 6 bestimmt wird.

Die Recheneinheit 12 berechnet jeweils nach einem Taktimpuls des Taktsignals $\pi$ die Zeitdauer $T_A$ der ak-

4

tiven Pulszeit. Der Ausdruck "aktive Pulszeit $T_A$" soll den Zeitraum angeben, für den die Eingangsgröße e innerhalb des nächsten Schaltspiels T bzw. des nächsten Abtastintervalls T mittels des Stellgliedes 4 mit der nachfolgenden Regelstrecke 10 verbunden werden soll. Dabei wird folgende Gleichung:

$$T_A = \frac{\overline{y*}}{\overline{e}} \cdot T \quad (1)$$

benutzt. Aus der Zeitdauer $T_A$ der aktiven Pulszeit und dem vorbestimmten Zeitinkrement $\delta t$ wird eine Anzahl $\alpha$ bestimmt, die angibt, wieviel Zeitinkremente $\delta t$ für die Darstellung der Zeitdauer $T_A$ verstreichen müssen. Diese Anzahl $\alpha$ wird gemäß folgender Gleichung

$$\alpha = \frac{T_A}{\delta t} \quad (2)$$

von der Recheneinheit 12 ebenfalls berechnet.

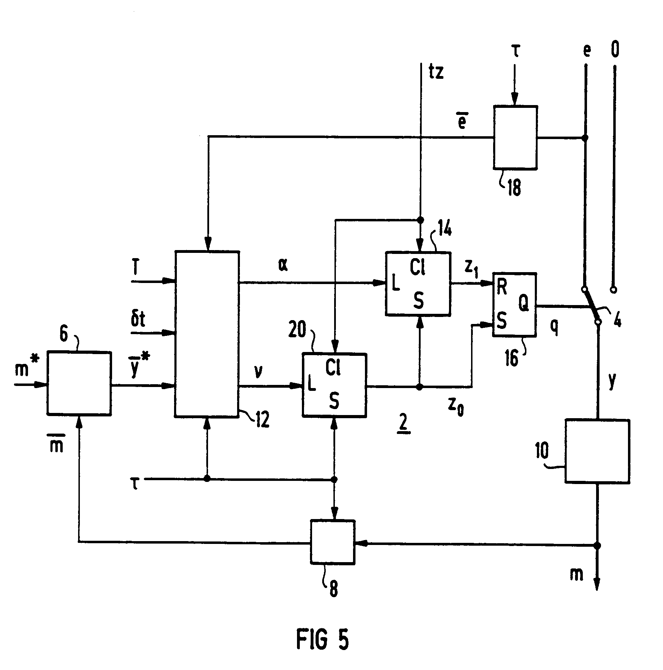

Mit dem Taktimpuls des Taktsignals $\pi$ wird das Ausgangssignal q des Flip-Flops 16 auf high gesetzt. Außerdem übernimmt der Rückwärtszähler 14 mit dem Taktimpuls die Anzahl $\alpha$ (Zählerstand). Der Rückwärtszähler 14 dekrementiert diesen Zählerstand $\alpha$ mit jedem Puls eines Taktsignals tz, daß die Frequenz $1/\delta t$ aufweist. Wenn der Zählerstand den Wert Null erreicht hat, gibt die Zählereinheit 14 einen Puls $z_1$ ab, der in einem Diagramm über der Zeit t in der Figur 3 dargestellt ist. Dadurch geht das Ausgangssignal q des Flip-Flops 16 auf low, wodurch der Eingang des Stellgliedes 4 wieder mit Null verbunden wird. Das am Ausgang des Flip-Flops 16 anstehende Ausgangssignal q ist in einem Diagramm über der Zeit t in der Figur 4 näher dargestellt. Wie dieser Puls q zeigt, befindet sich die aktive Pulszeit $T_A$ am Anfang eines jeden Abtastintervalls T.

Mittels dieses Steuersatzes 2 soll der erzeugte Mittelwert $\overline{y}$ der geschalteten Größe y, auch Stellgröße genannt, gleich dem geforderten Mittelwert $\overline{y*}$ der Sollstellgröße y* sein.

Zur Vereinfachung sind immer gleiche Blöcke der Blockschaltbilder mit denselben Bezugszeichen versehen.

Die Figur 5 zeigt ein Blockschaltbild einer einfachen Pulsbreitensteuerung 2 herkömmlicher Art, wobei die aktive Pulszeit $T_A$ in der Mitte eines Schaltspiels T liegt. Damit die aktive Pulszeit $T_A$ in der Mitte eines jeden Schaltspiels T liegt, ist der Steuersatz 2 um eine weitere Zählereinheit 20 erweitert worden, dessem Clock-Eingang Cl ebenfalls das Taktsignals tz zugeführt wird. Über den Setzeingang S ist dieser Rückwärtszähler 20 ebenfalls mittels des Taktsignals setzbar. Eingangsseitig ist dieser Rückwärtszähler 20 mit der Recheneinheit 12 verknüpft, die jeweils nach einem Taktimpuls des Taktsignals $\pi$ zusätzlich eine Zeitdauer $T_0$, auch passive Pulszeit genannt, berechnet. Diese passive Pulsdauer $T_0$ wird gemäß folgender Gleichung:

$$T_0 = (1 - \frac{\overline{y*}}{\overline{e}} \cdot T/2 \quad (3)$$

berechnet. Aus dieser berechneten passiven Pulszeit $T_0$ wird mittels des Zeitinkrements $\delta t$ die Anzahl $\nu$ der Zeitinkremente $\delta t$, die dieser Zeit entspricht, gemäß folgender Gleichung:

$$\nu = \frac{T_0}{\delta t} \quad (4)$$

berechnet. Mit einem Taktimpuls des Taktsignals $\pi$ wird der Rückwärtszähler 20 geladen und dieser Zählerstand $\nu$ mit jedem Puls des Taktsignals tz dekrementiert. Wenn der Zählerstand den Wert Null erreicht hat, gibt die Zählereinheit 20 einen Puls $z_0$ ab, wodurch das Ausgangssignal q des Flip-Flops 16 auf high gesetzt wird. Die Pulse $z_0$ sind in einem Diagramm über der Zeit t in der Figur 7 näher dargestellt. Der Puls $z_0$ startet gleichzeitig die Zählereinheit 14, die die aktive Pulszeit $T_A$ bestimmt.

Da die aktive Pulszeit $T_A$ aufgrund des Mittelwert e der Eingangsgröße e bestimmt wird, entspricht die realisierte Stellgröße $\overline{y}$ bei veränderlicher Eingangsgröße e bei beiden beschriebenen Anordnungen nicht dem Sollwert $\overline{y*}$.

Da sich die Eingangsgröße e von einem Abtastschritt zum nächsten ändert, ergibt sich ein Fehler, weil die Recheneinheit 12 nur den Mittelwert e der Eingangsgröße e im vergangenen Abtastintervall T berücksichtigen kann.

Wie die Figur 12 zeigt, entspricht der Mittelwert $\overline{y}$ der Stellgröße y auch dann nicht der Sollstellgröße $\overline{y*}$, wenn der über das Abtastintervall T gemittelte Wert der Eingangsgröße e zwar in aufeinanderfolgenden Intervallen gleich ist, aber der durch Mittelung über die aktive Pulszeit $T_A$ gebildete Wert davon abweicht. Dies ist z.B. dann der Fall, wenn sich die Eingangsgröße e immer dann ändert, wenn sie durch die Regelstrecke 10 belastet wird. In Figur 12 ist die Stellgröße y um die schraffierte Fläche zu klein.

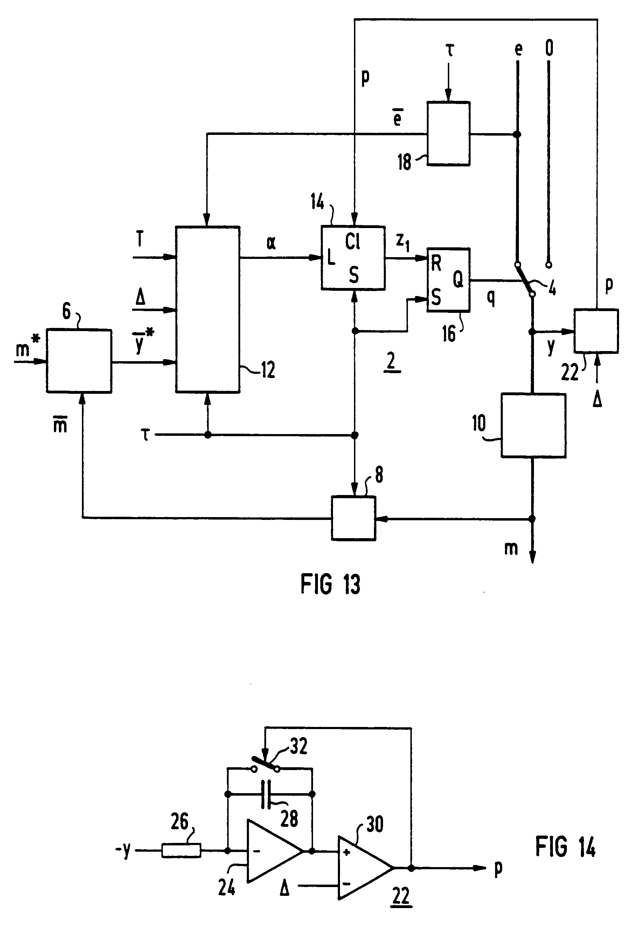

Das in der Figur 13 dargestellte Blockschaltbild entspricht im wesentlichen dem Blockschaltbild der Figur 1. Der Unterschied zu diesem Blockschaltbild besteht darin, daß ein Taktgenerator 22 vorgesehen ist, dem eingangsseitig die Stellgröße y und eine Einheits-Spannungszeitfläche $\Delta$ zugeführt ist und die ausgangsseitig mit dem Clock-Eingang Cl der Zählereinheit 14 verbunden ist. Außerdem ist der Recheneinheit 12 der Zahlenwert der Einheits-Spannungszeitfläche $\Delta$ anstelle des Zahlenwertes des Zeitinkrements $\delta t$ zugeführt.

Der Taktgenerator 22 erzeugt in Abhängigkeit der Stellgröße y, die während der aktiven Pulszeit $T_A$ der Eingangsgröße e entspricht, und der Einheits-Spannungszeitfläche $\Delta$ ein Taktsignal p, dessen Taktimpulse den Zählerstand $\alpha$ der Zählereinheit 14 dekrementieren. Da, wie in der Figur 10 dargestellt ist, die Eingangsgröße e innerhalb der aktiven Pulszeit $T_A$ einbricht, ändern sich die zeitlichen Abstände der Pulse des Taktsignals p. Dadurch verändert sich die Frequenz in Abhängigkeit der schwankenden Eingangsgröße e und damit auch die Dauer der aktiven Pulszeit $T_A$. Die Recheneinheit 12 berechnet bei dieser Ausführungsform die Anzahl $\alpha$ gemäß folgender Gleichung:

$$\alpha = \overline{y}^* \cdot \frac{T}{\Delta} \quad (5)$$

Die so erzeugte Stellgröße y stimmt im Mittelwert $\overline{y}$ nun exakt mit dem geforderten Mittelwert $\overline{y}^*$ der Sollstellgröße y* über ein. Änderungen der Eingangsgröße e bleiben ohne Auswirkung auf den Mittelwert $\overline{y}$ der Stellgröße y, unabhängig davon, ob sie während der aktiven Pulszeit $T_A$ oder der passiven Pulszeit $T_0$ auftreten. So wird z.B. die wiederholte Austastung von vom Mittelwert $\overline{e}$ der Eingangsgröße e abweichenden Werten korrigiert und Aliasing-Effekte treten nicht auf.

Bei der Anwendung dieses erfindungsgemäßen Verfahrens und dieser Vorrichtung bei einem Pulsumrichter entspricht der Mittelwert der Umrichterausgangsspannung auch bei schnell veränderlicher Zwischenkreisspannung exakt der Vorgabe. Stabilitätsprobleme in der Motorregelung, deren Ursache in einer weichen Zwischenkreisspannung liegt, werden verhindert. Außerdem werden durch die Welligkeit der Zwischenkreisspannung hervorgerufene Schwebungen in der Motorspannung unterdrückt.

In der Figur 14 ist beispielhaft ein elektrisches Ersatzschaltbild des Taktgenerators 22 näher dargestellt. Dieser Taktgenerator 22 besteht aus einem ersten Verstärker 24, der mittels eines Widerstandes 26 und eines Kondensators 28 als Integrator geschaltet ist. Ein zweiter Verstärker 30 wird als Komparator verwendet, der das Ausgangssignal des Integrators - eine Spannungszeitfläche - mit der Einheits-Spannungszeitfläche $\Delta$ vergleicht. Sobald das Integral der Eingangsgröße y des Taktgenerators 22 größer als die Einheits-Spannungszeitfläche $\Delta$ geworden ist, gibt der als Komparator geschaltete Verstärker 30 einen kurzen Puls ab. Dieser Puls setzt ebenfalls den Integrator auf Null, indem ein Kurzschließer 32, der elektrisch parallel zum Kondensator 28 geschaltet ist, geschlossen wird. Jeder Impuls des Taktimpulses p entspricht daher einer Einheits-Spannungszeitfläche $\Delta$ der Eingangsgröße y. Gemäß dieser Wirkungsweise wird der Taktgenerator 22 auch als Spannungs-Frequenzwandler bezeichnet. Beispielsweise wird die Einheits-Spannungszeitfläche $\Delta$ als Produkt einer Nenn-Eingangsgröße $e_n$ und eines Zeitinkrements $\delta p$ berechnet. Dabei ist das Zeitinkrement $\delta p$ sehr viel kleiner als ein Schaltspiel T. Ist beispielsweise das Schaltspiel T 1 msec. lang, so kann das Zeitinkrement $\delta p$ 0,2 μsec. lang sein.

An den Taktgenerator 22 kann als Eingangsgröße statt der Stellgröße y auch die Eingangsgröße e angeschlossen werden. Die Funktion der Schaltung ändert sich dadurch nicht, wenn der durch die Pulse q angesteuerte Schalter des Stellgliedes ideale Eigenschaften hat.

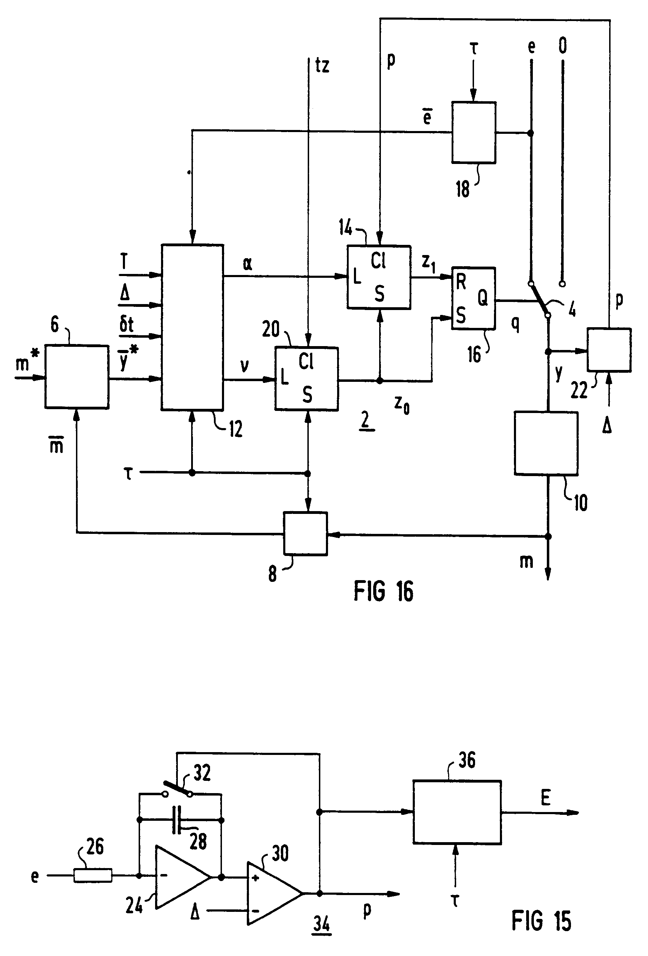

Für diesen Fall kann man den Taktgenerator 22 und die Meßeinrichtung 18 vorteilhafterweise zusammenfassen. Eine derartige Funktionseinheit 34 zeigt das elektrische Ersatzschaltbild der Figur 15. Dem Ausgang des zweiten Verstärkers 30 ist eine Zähler- und Speichereinheit 36 nachgeschaltet. Der Zähler dieser Zähler- und Speichereinheit 36 addiert die Impulse des Taktsignals p auf. Mit Beginn eines neuen Abtastintervalls T, generiert durch das Taktsignal $\pi$ wird der Zählerstand als Ausgangsgröße E gespeichert und der Zähler auf Null zurückgesetzt.

Das in der Figur 16 dargestellte Blockschaltbild entspricht im wesentlichen dem Blockschaltbild der Figur 5. Wie bei dem Blockschaltbild gemäß figur 13 sind beim Blockschaltbild gemäß Figur 16 gegenüber dem Blockschaltbild gemäß Figur 5 Änderungen vorgenommen worden. Da, wie bereits erwähnt und durch das Diagramm der Figur 12 dargestellt, sich nur während der aktiven Pulszeit $T_A$ ein Fehler bei der Erzeugung der geschalteten Stellgröße y ergibt, erhält nur die Zählereinheit 14 das neue Taktsignal p, wogegen die Zählereinheit 20 weiterhin das Taktsignal tz zum Dekrementieren erhält.

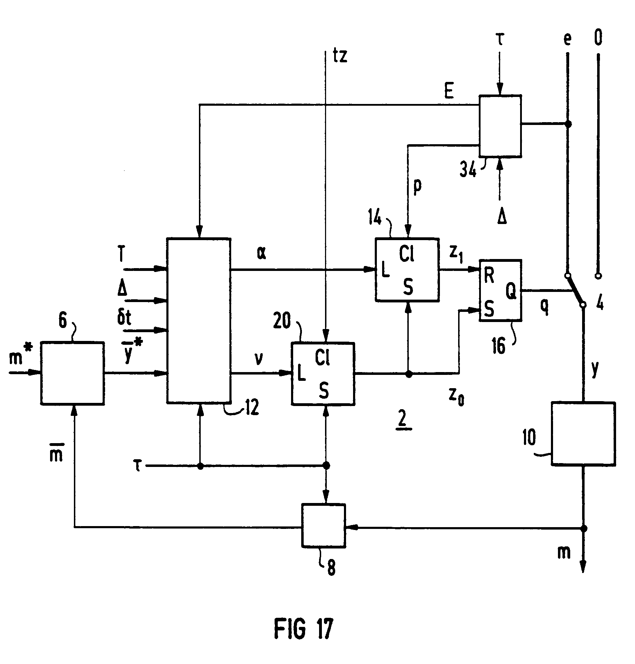

Das Blockschaltbild in der Figur 17 ist eine vorteilhafte Weiterbildung des Blockschaltbildes der Figur 16, wobei die Meßeinrichtung 18 und der Taktgenerator 22 zu der Funktionseinheit 34, gemäß dem elektrischen Ersatzschaltbild der Figur 15, zusammengefaßt sind. Die Ausgangsgröße e der Zähler- und Speichereinheit 36 dieses Ersatzschaltbildes wird der Recheneinheit 12 zugeführt, die den Mittelwert $\overline{e}$ der Eingangsgröße e des Stellgliedes 4 im Abtastintervall gemäß folgender Gleichung:

$$\overline{e} = E \cdot \frac{\Delta}{T} \quad (6)$$

berechnet. Mit diesem Mittelwert $\overline{e}$ der Eingangsgröße e wird gemäß Gleichung (3) die Dauer der passiven Pulszeit $T_0$ von der Recheneinheit 12 berechnet. Mittels der Gleichungen (5) und (4) werden die Zählerstände $\alpha$ und $\nu$ berechnet, die mittels dem Schaltnetzwerk, bestehend aus den Zählereinheiten 14 und 20 und dem Flip-Flop 16, in das Ausgangssignal q des Steuersatzes 2 bzw. in das Zündsignal q des Stellgliedes 4 umgewandelt werden.

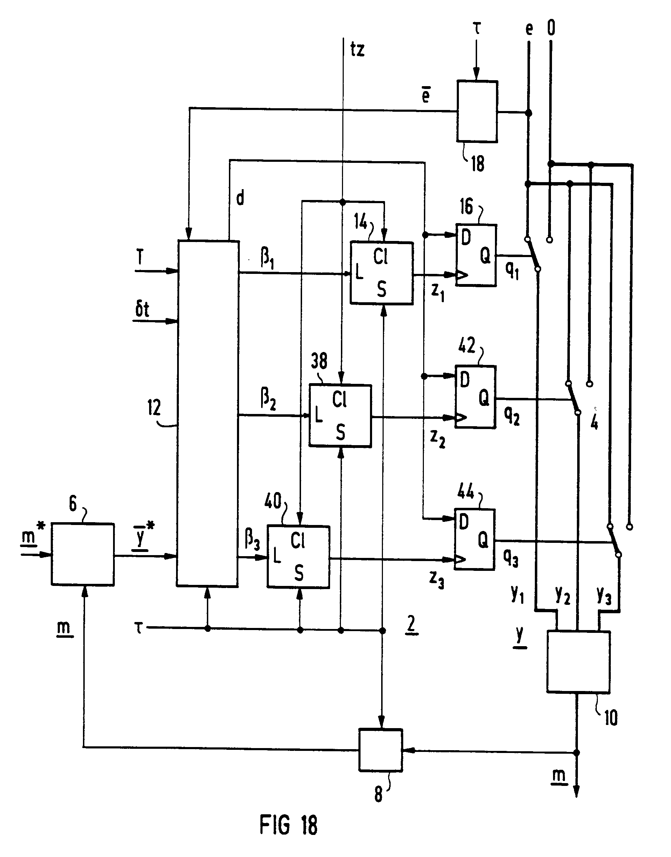

Ein häufiger Anwendungsfall für Pulsbreitensteuerungen sind Pulswechselrichter für dreiphasige Verbraucher, z.B. für Drehstrommaschinen. Weil bei solchen Anlagen der Sternpunkt des Verbrauchers regelmäßig nicht angeschlossen wird, beeinflussen sich die einzelnen Stränge gegenseitig. Eine Verdreifachung der in den Figuren 1, 5, 13, 16 und 17 beschriebenen einphasigen Pulssteuerungen liefert daher schlechte Ergebnisse. Herkömmliche Steuerverfahren, die diese Tatsache berücksichtigen, sind beispielsweise in der DE 31 31 344 C2 und in der Zeitschrift "Antriebstechnik" 27, 1988, Nr.4, Seiten 38 bis 42 beschrieben. Bei der dreiphasigen Ausführung des Steuersatzes 2 nach Figur 18 erzeugt das Stellglied 4 als Stellgröße y einen Stellvektor $\underline{y}$, der folgendermaßen

$$\underline{y} = y \cdot e^{j\phi} \quad (7)$$

als Raumzeiger dargestellt werden kann. Bei der Ausführungsform nach Figur 18 erzeugt nun der Regler 6 einen Sollstellvektor $\underline{y}^*$, der der Recheneinheit 12 zugeführt wird.

In Anlehnung an den einphasigen Fall kann man hier als aktive Zustände solche Schaltkombinationen des Stellgliedes 4 bezeichnen, bei denen die Eingangsgröße e zwischen zwei Klemmen der Regelstrecke 10 liegt. Nullzustände sind die Schaltkombinationen, bei denen alle verketteten Eingangsgrößen Null sind. Das sind die Zustände $q_1=q_2=q_3$="low" und $q_1=q_2=q_3$="high". Während dieser Zustände hat die Eingangsgröße e keinen Einfluß auf die Ausgangsgrößen $y_1, y_2$ und $y_3$ des Stellgliedes 4. Bei der beschriebenen Steuerung treten diese Zustände jeweils zu Beginn und am Ende des Schaltintervalls T auf.

Die Recheneinheit 12 berechnet die Zeitpunkte $T_1$, $T_2$ und $T_3$, zu denen sich der Schaltzustand $q_1$, $q_2$ bzw. $q_3$ ändern soll. Als Beispiel sei im folgenden ein Fall mit $0 < \phi < 60°$ betrachtet. Es ergibt sich nach DE 31 31 344 C2:

$$T_1 = T/2 \cdot (1 - r \cdot \sin(\phi - 60°) - r \cdot \sin\phi) \quad (8)$$
$$T_2 = T \cdot r \cdot \sin(\phi - 60°) + T_1 \quad (9)$$
$$T_3 = T \cdot r \cdot \sin\phi + T_2 \quad (10)$$

wobei

$$r = \sqrt{3}\, y \,*\, / \,\overline{e} \quad (11)$$
$$\beta_i = T_i/\delta t \qquad i = 1,2,3 \quad (12)$$

Der Recheneinheit 12 sind neben der Zählereinheit 14 mit nachgeschaltetem Flip-Flop 16 noch zwei weitere Zähleinheiten 38 und 40 nachgeschaltet, wobei diese weiteren Zählereinheiten 38 und 40 ausgangsseitig jeweils mit einem Flip-Flop 42 und 44 verbunden sind. An den Ausgängen der Recheneinheit 12 stehen drei Zählerstände $\beta_1, \beta_2$ und $\beta_3$ an, die die berechneten Zeitpunkte $T_1$, $T_2$ und $T_3$ als Anzahl von Zeitinkrementen $\delta t$ angeben. Wie bereits bei den einphasigen Ausführungen beschrieben, werden die Schaltzustände $q_1$, $q_2$ und $q_3$ mittels des Schaltwerks, bestehend aus den Zählereinheiten 14, 38 und 40 und den Flip-Flops 16, 42 und 44, erzeugt. Dazu werden den Zählereinheiten 14, 38 und 40 jeweils ein Taktsignal tz an den Clock-Eingang CI zugeführt. Das Taktsignal $\pi$, das die Dauer eines Schaltspiels T bzw. Schaltintervalls T angibt, wird u.a. ebenfalls der Recheneinheit 12 und den Zählereinheiten 14, 38 und 40 zugeführt.

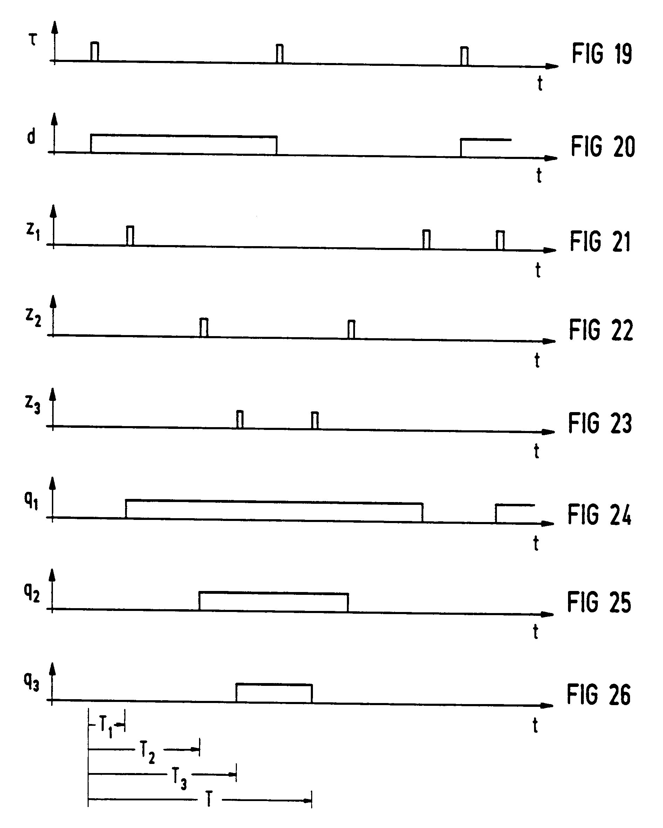

Wie die Signalverläufe der Signale $\pi$ ,d,$z_1,z_2,z_3,q_1,q_2$ und $q_3$ in den Figuren 19 bis 26 zeigen, schaltet das Taktsignal $\pi$ das Datensignal d auf high, womit die Dateneingänge D der Flip-Flops 16, 42 und 44 gesetzt sind. Ebenfalls werden mit dem Taktsignal $\pi$ die Zählerstände $\beta_1$, $\beta_2$ und $\beta_3$ in die Zählereinheiten 14, 38 und 40 übernommen, die dann mit jedem Puls des Taktsignals tz dekrementiert werden. Wenn der Zählerstand der Zählereinheit 14 den Wert Null erreicht hat, gibt diese Zählereinheit 14 einen Puls $z_1$ (Figur 21) ab, wodurch das Ausgangssignal $q_1$ (Figur 24) des Flip-Flops 16 den Zustand seines Dateneingangs D annimmt. Sobald die Zählerstände der Zählereinheiten 38 und 40 ebenfalls den Wert Null erreicht haben, geben diese jeweils einen Puls $z_2$ bzw. $z_3$ (Figur 22 bzw. 23) ab, wodurch das Ausgangssignal $q_2$ bzw. $q_3$ (Figur 25 bzw. 26) des Flip-Flops 42 bzw. 44 den Zustand seines Dateneingangs D annimmt.

Das Datensignal d (Figur 20) gibt an, welcher Schaltzustand $q_1$, $q_2$ bzw. $q_3$ sich bei einem Puls $z_1,z_2$ bzw. $z_3$ einstellen soll. Üblicherweise ist das Datensignal d für alle Flip-Flops 16, 42 und 44 gleich und wechselt bei jedem Takt des Taktsignals $\pi$ seinen Zustand.

Wenn die Eingangsgröße e nicht konstant ist, treten beim Stellglied 4 (Pulswechselrichter) ähnliche Probleme auf, wie im einphasigen Fall. Die erfindungsgemäße Steuerung löst diese Probleme, indem sie die Dauer der aktiven Zustände innerhalb des Schaltspiels T über die Pulsfolge p von Einheits-Spannungszeitflächen $\Delta$ bestimmt.

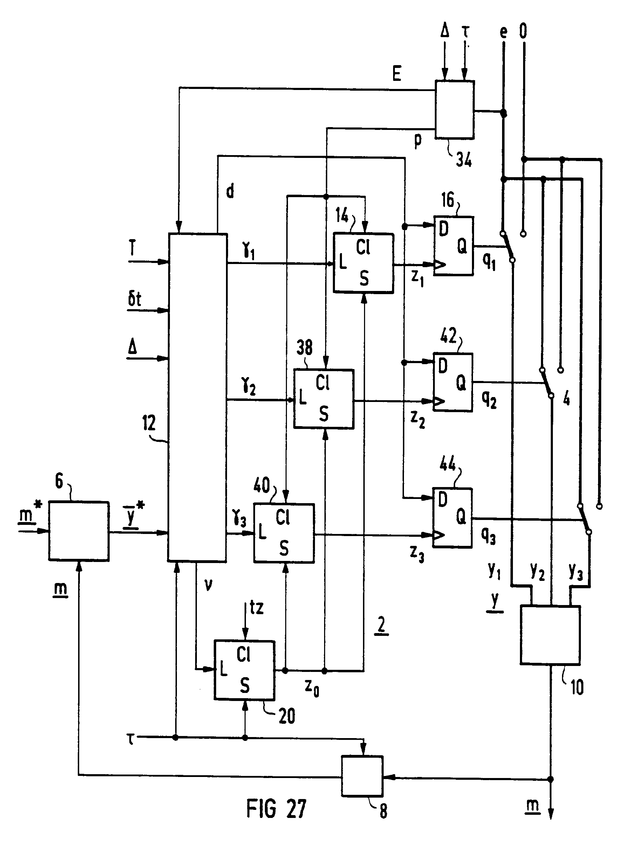

Die Figur 27 zeigt eine dreiphasige Realisierungsmöglichkeit, bei der die Dauer $T_0$ der Nullzeit zu Beginn des Schaltintervalls T über einen zusätzlichen Zähler 20 erzeugt wird. Das Ausgangssignal $z_0$ startet die Zählereinheiten 14, 38 und 40. Der Zähltakt der Zählereinheiten 14, 38 und 40 dieser gezeigten Ausführungsform ist die Pulsfolge p, deren Frequenz proportional zur Eingangsgröße e ist. Für das dargestellte Schaltintervall T ergeben sich die Vorgaben für die Zählereinheiten 14, 20, 38 und 40 aus folgenden Gleichungen:

$$\nu = T_1/\delta t = T/2 \cdot (1 - r \cdot \sin(\phi - 60°) - r \cdot \sin\phi)/\delta t \quad (13)$$
$$\gamma_1 = 0 \quad (14)$$

$$\gamma_2 = r \cdot E \cdot \sin(\phi - 60°) \quad (15)$$
$$\gamma_3 = r \cdot E \cdot (\sin(\phi - 60°) + \sin\phi) \quad (16)$$

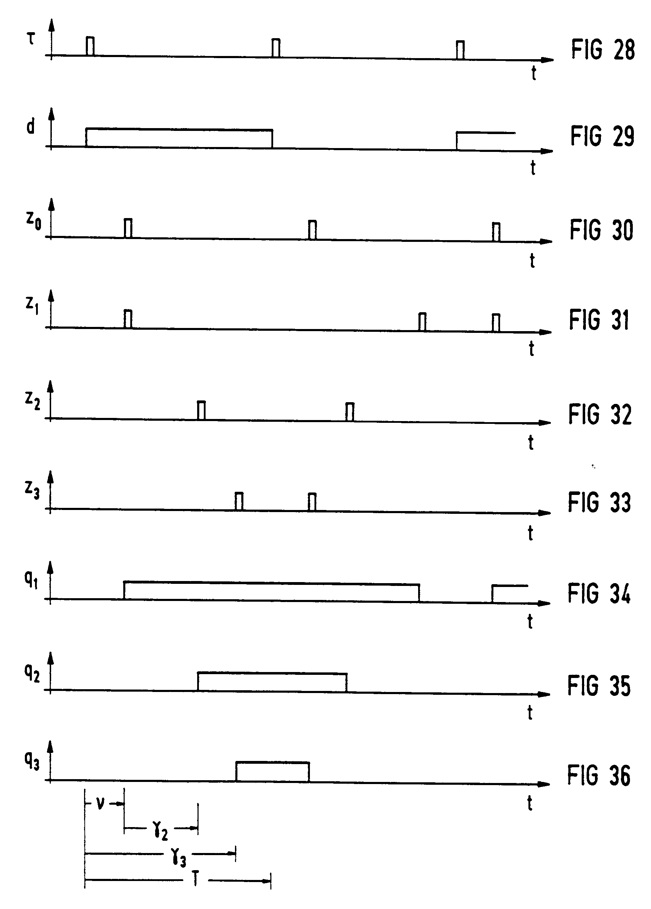

Die Berechnung dieser Zählerstände $\nu$, $\gamma_1$, $\gamma_2$ und $\gamma_3$ wird von der Recheneinheit 12 durchgeführt. Die zu dieser dargestellten Ausführungsform zugehörigen Signale sind in den Figuren 28 bis 36 jeweils in einem Diagramm über der Zeit t näher dargestellt.

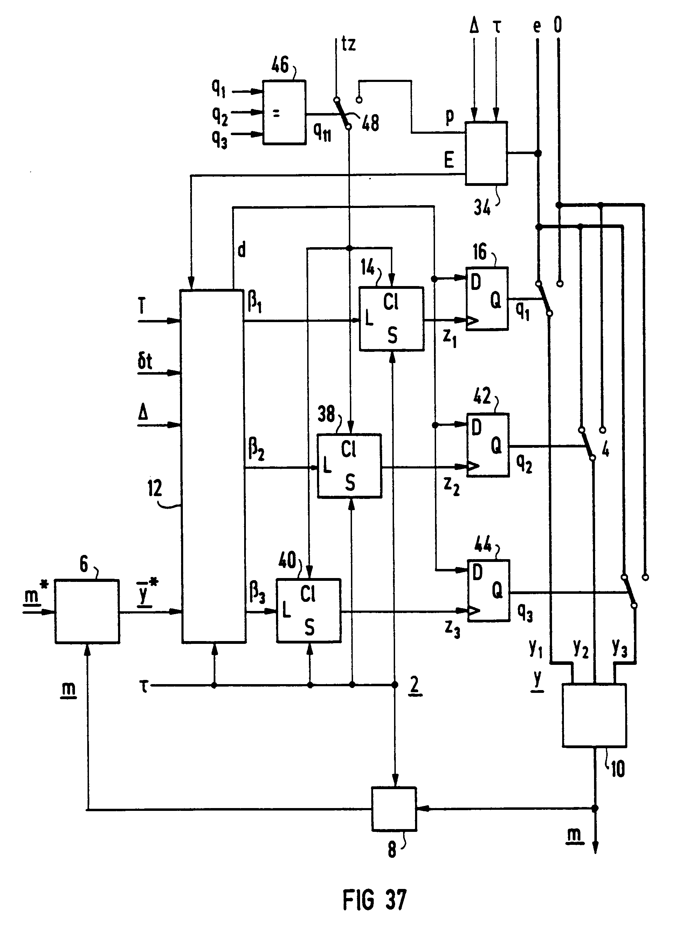

In der Figur 37 ist eine vorteilhafte Ausführungsform des Modulators 2 nach Figur 27 dargestellt. Bei dieser vorteilhaften Ausführungsform ist die Zählereinheit 20 zur Ermittlung der Dauer $T_0$ der Nullzeit nicht erforderlich. Dafür ist ein Gatter 46, beispielsweise ein EXNOR-Gatter vorgesehen, an dessen Eingänge die Schaltzustände $q_1$, $q_2$ und $q_3$ anstehen. Ausgangsseitig ist dieses Gatter 46 mit einem Betätigungseingang eines Umschalters 48 verknüpft, an dessem einen Eingang das Taktsignal tz und an dessem anderen Eingang das in Abhängigkeit der Eingangsgröße e erzeugte Taktsignal p anstehen. Ausgangsseitig ist dieser Umschalter 48 jeweils mit dem Clock-Eingang Cl der Zählereinheiten 14, 38 und 44 verknüpft. Das Gatter 46 schaltet den Takt für die Zählereinheiten 14, 38 und 40 auf den Eingang mit dem Taktsignal tz, wenn einer der beiden Nullzustände eingestellt ist, und auf den Eingang mit dem Taktsignal p, wenn ein aktiver Zustand vorliegt. Für diese Schaltung ergibt sich bei dem betrachteten Fall:

$$\beta_1 = T_1/\delta t \quad (17)$$
$$\beta_2 = r \cdot E \cdot \sin(\phi - 60°) + \beta_1 \quad (18)$$
$$\beta_3 = r \cdot E \cdot \sin\phi + \beta_2 \quad (19)$$

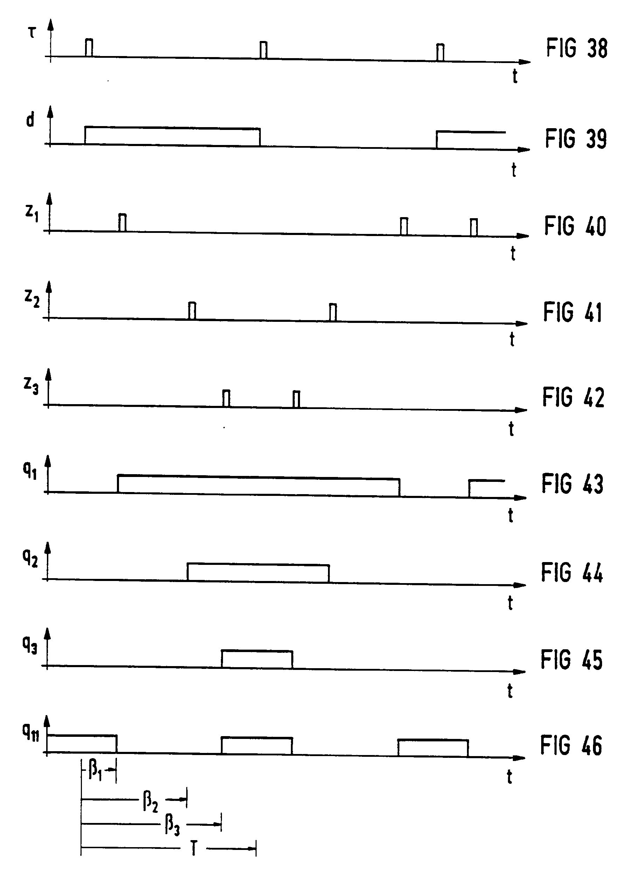

Diese angegebenen Gleichungen werden ebenfalls mittels der Recheneinheit 12 gelöst. Die Signalverläufe dieser Ausführungsform gemäß Figur 37 sind in den Figuren 38 bis 46 jeweils in einem Diagramm über der Zeit t näher dargestellt.

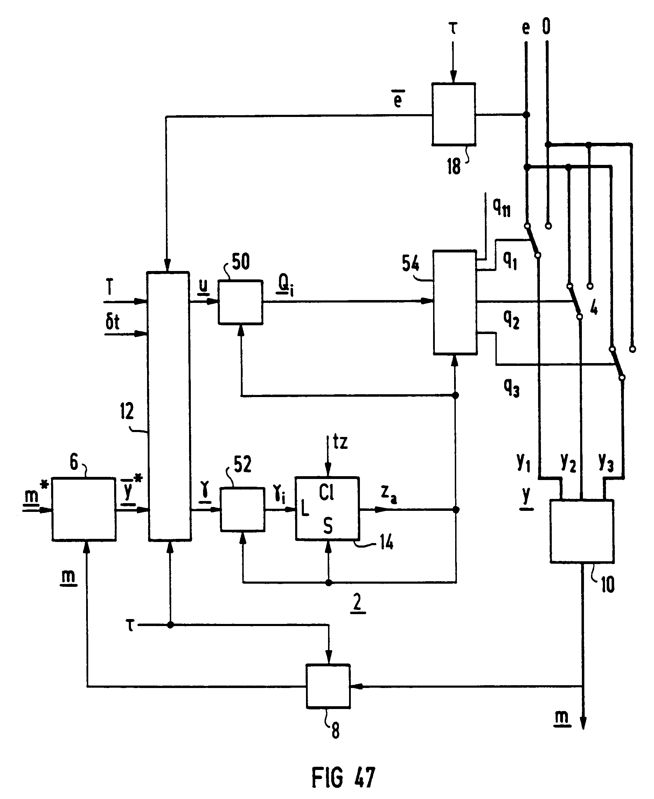

In Figur 47 ist eine weitere Ausführungsform des Modulators 2 herkömmlicher Art für eine dreiphasige Pulsbreitensteuerung veranschaulicht. Dieser Modulator 2 besteht ebenfalls aus einer Recheneinheit 12, einem Schaltwerk und einer Meßeinrichtung 18. Das Schaltwerk besteht aus zwei Speichern 50 und 52, insbesondere FIFO-Speicher, einer Zählereinheit 14 und einem Ausgangsspeicher 54. Die Recheneinheit 12 schreibt vor Beginn eines Schaltspiels T alle Zählerwerte $\underline{\gamma} = (\gamma_1, \gamma_2, \gamma_3, \gamma_4)$ eines folgenden Schaltspiels T in den FIFO-Speicher 52 und alle zugehörigen Schalterstellungen $\underline{u} = (\underline{Q_1}, \underline{Q_2}, \underline{Q_3}, \underline{Q_4})$ in den FIFO-Speicher 50. Die Matrix der Schaltstellung $\underline{u}$ besteht aus vier Vektoren $\underline{Q_1}, \ldots \underline{Q_4}$, wobei der Vektor $\underline{Q_1}$ beispielsweise die gewünschten Schaltzustände $q_1$, $q_2$, $q_3$ und $q_{11}$ eines ersten Abtastintervalls T bezeichnet. Jeweils, wenn ein Zählerstand $\gamma_i$ abgearbeitet ist, erscheint am Ausgang der Zählereinheit 14 ein Puls $z_a$. Dieser Ausgang der Zählereinheit 14 ist mit den Setzeingängen der FIFO-Speicher 50 und 52, des Ausgangsspeichers 54 und der Zähleinheit 14 verknüpft. Mit dem Puls $z_a$ wird die nächste Schaltkombinatoion $\underline{Q_j}$ aus dem FIFO-Speicher 50 in den Ausgangsspeicher 54 geladen. Ebenfalls wird der nächste Zählerstand $\gamma_i$ aus dem FIFO-Speicher 52 in der Zählereinheit 14 übernommen.

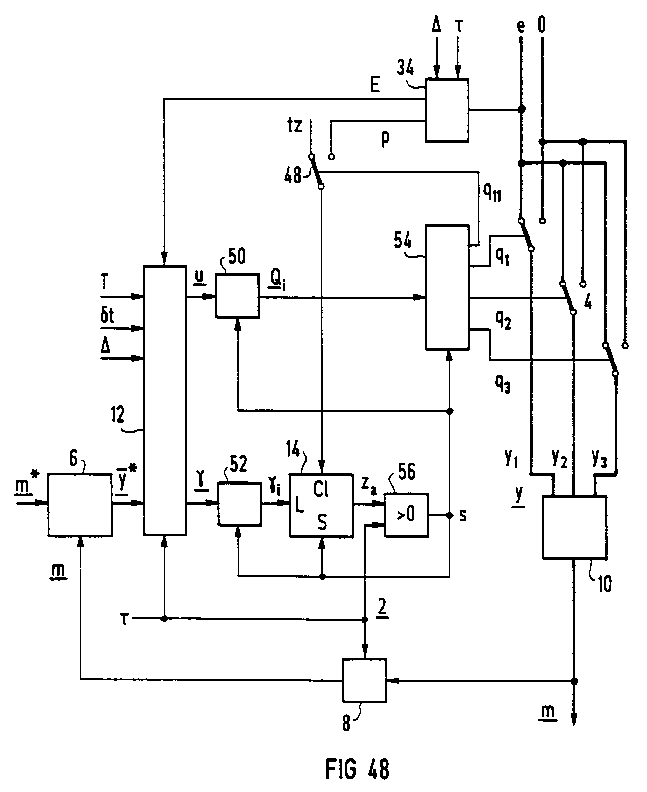

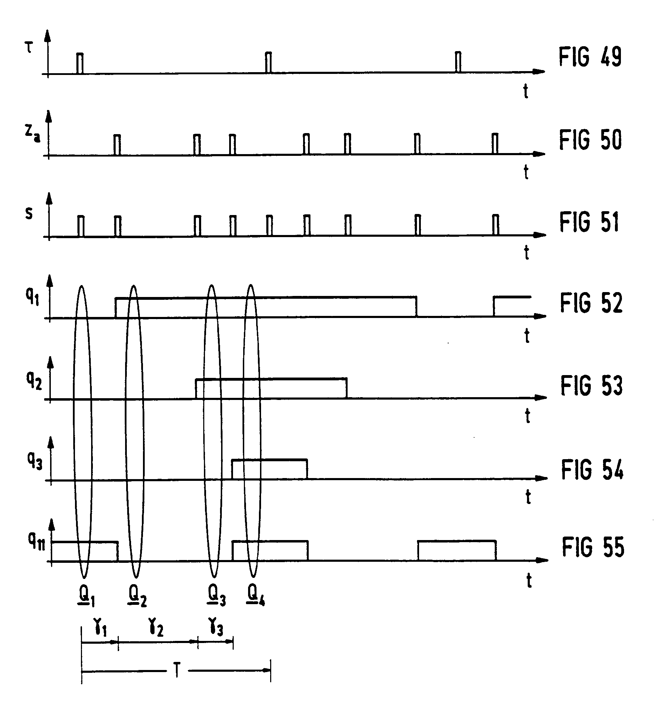

Eine erfindungsgemäße Ausführungsform des Modulators 2 nach Figur 47 ist in Figur 48 näher dargestellt, wobei die zugehörigen Signalverläufe jeweils in einem Diagramm über der Zeit t in den Figuren 49 bis 55 veranschaulicht sind. Bei der erfindungsgemäßen Ausführungsform ist anstelle der Meßeinrichtung 18 die Funktionseinheit 34 angeordnet. Außerdem ist der Ausgang des Ausgangsspeichers 54, der den Schaltzustand $q_{11}$ führt, mit dem Betätigungseingang des Umschalters 48 verknüpft. Wie bereits erwähnt, steht an einem Eingang des Umschalters 48 das Taktsignal tz und am anderen Eingang das Taktsignal p der Funktionseinheit 34 an. Ausgangsseitig ist der Umschalter 48 mit dem Clock-Eingang Cl der Zählereinheit 14 verbunden. Der Zählereinheit 14 ist nun ein ODER-Gatter 56 nachgeschaltet, dessen Ausgang mit den Setzeingängen der FIFO-Speicher 50 und 52, der Zähleinheit 14 und des Ausgangsspeichers 54 verknüpft ist. Dem zweiten Eingang des ODER-Gatters 56 ist das Taktsignal $\pi$ zugeführt. Jedesmal, wenn an einem Eingang des ODER-Gatters 56 ein Puls ansteht, erscheint am Gatterausgang ein Setzsignal s (Figur 51). Bei jedem Setzimpuls s des ODER-Gatters 56 wird die nächste Schaltkombination $\underline{Q_j}$ aus dem FIFO-Speicher 50 in den Ausgangsspeicher 54 geladen und die Zählereinheit 14 wird auf den nächsten Zählerstand $\gamma_i$ gesetzt. Die Nullzeit am Ende des Schaltintervalls T muß durch das Taktsignal $\pi$ beendet werden. Zu diesem Zweck wird der Zählerstand $\gamma_4$ auf einen sehr großen Wert, beispielsweise $\gamma_4$ T/$\delta t$, gesetzt, so daß die Zählereinheit 14 für diesen Abschnitt unwirksam wird.

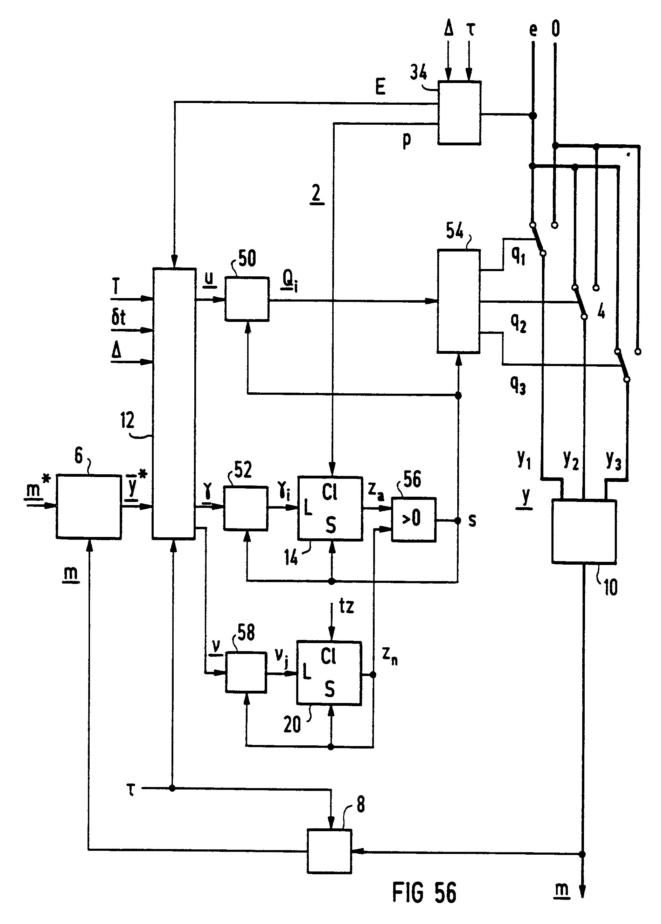

Die bisher beschriebenen Schaltungen gemäß den Figuren 27, 37, 47 und 48 eignen sich nur für Modulationsarten, bei denen die Nullzustände bzw. die passiven Pulszeiten zu Beginn und am Ende dieses Abtastintervalls T liegen. Die Ausführungsform des Steuersatzes 2 nach Figur 56 kann hingegen beliebige Schaltzyklen - also auch optimierte Pulsmuster - realisiseren. Bei diesem Steuersatz 2 wird von der Recheneinheit 12 die Dauer $T_0$ der Nullzustände als Anzahl $\underline{\nu}$ $(\nu_j)$ von Zeitinkrementen $\delta t$ berechnet und einem weiteren Speicher 58, insbesondere einem FIFO-Speicher, zugeführt. Ausgangsseitig ist dieser FIFO-Speicher 58 mit der Zählereinheit 20 verknüpft, an deren Clock-Eingang Cl des Taktsignals tz ansteht. Im Gegensatz dazu steht am Clock-Eingang Cl der Zählereinheit 14, die zur Dekrementierung der Zählerstände $\gamma_i$ der aktiven Pulszeiten

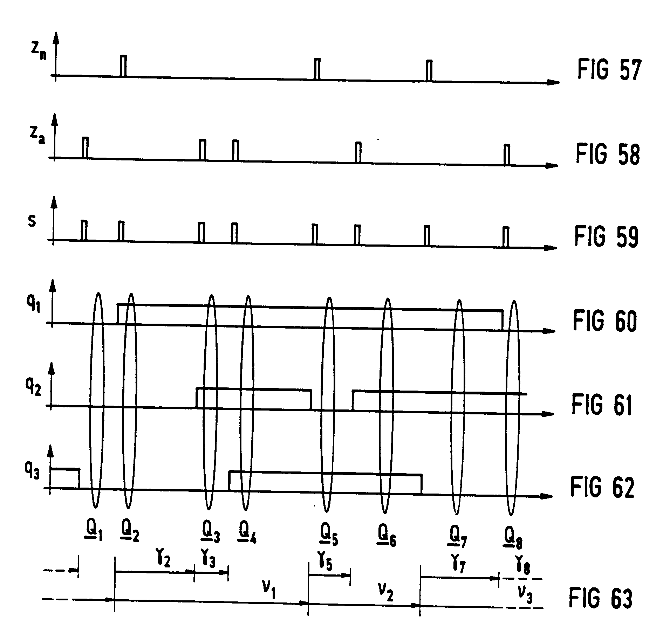

vorgesehen ist, das Taktsignal p, das von der Funktionseinheit 34 in Abhängigkeit hängigkeit von Einheits-Spannungszeitflächen $\Delta$ und der Eingangsgröße e des Stellgliedes 4 erzeugt wird. Das Ausgangssignal $z_n$ (Figur 57) der Zählereinheit 20 wird jeweils einerseits dem Setzeingang des FIFO-Speichers 58 und der Zählereinheit 20 und andererseits einem zweiten Eingang des ODER-Gatters 56 zugeführt. Jedesmal, wenn ein Puls $z_n$ der Zählereinheit 20 (Figur 57) oder ein Puls $z_a$ (Figur 58) der Zählereinheit 14 an den Eingängen des ODER-Gatters 56 anstehen, generiert dieses ODER-Gatter 56 ein Setzsignal s (Figur 59), das wie in der Ausführungsform gemäß Figur 48 weitergeleitet wird. Die Zählerstände $\gamma_i$ sind entweder die gewünschte Zahl von Einheits-Spannungs zeitflächen $\Delta$ , wenn i ein aktiver Schaltzustand ist oder ein sehr großer Wert, wenn es sich um einen Nullzustand handelt. Der Zählerstand $v_j$ ergibt sich jeweils aus der gewünschten Zeitdifferenz zwischen dem Ende eines Nullzustandes und dem Ende des folgenden Nullzustandes.

Optimierte Pulsmuster ergeben sich dabei natürlich nur, wenn die Eingangsgröße e des Stellgliedes 4 konstant ist. Ansonsten sorgt diese Schaltung dafür, daß in den aktiven Zuständen die gleichen Spannungszeitflächen an die Regelstrecke 10 gelegt werden, wie dies bei optimierten Pulsmustern und konstanter Eingangsgröße e der Fall wäre.

Mit diesem erfindungsgemäßen Verfahren und diesen Vorrichtungen zur Durchführung des Verfahrens kann unabhängig von einer schwankenden Eingangsgröße e des Stellgliedes 4 mittels dieses Stellgliedes 4 eine Stellgröße $y$ bzw. $\underline{y}$ erzeugt werden, die exakt einer vorgegebenen Sollstellgröße $\bar{y}^*$ bzw. $\underline{y}^*$ entspricht. Auch bei einer schnell veränderlichen Eingangsgröße e entspricht der Mittelwert der Stellgröße $y$ bzw. $\underline{y}$ exakt der Vorgabe $\bar{y}^*$ bzw. $\underline{y}^*$. Stabilitätsprobleme in der Regelung der Regelstrecke 10, deren Ursache in einer zu weichen Eingangsgröße e des Stellgliedes 4 liegen, werden verhindert. Durch die Welligkeit der Eingangsgröße hervorgerufene Schwebungen in der Stellgröße $y$ bzw. $\underline{y}$ werden ebenfalls unterdrückt. Der hardwaremäßige Aufwand zur Realisierung dieses erfindungsgemäßen Verfahrens besteht lediglich darin, daß beispielsweise ein U/F-Wandler mit einer Maximalfrequenz im MHz-Bereich zusätzlich verwendet wird.

## Patentansprüche

1. Verfahren zur Einstellung von Mittelwerten ($\bar{y}$, $\underline{\bar{y}}$) einer aus einer geschalteten Eingangsgröße (e) erzeugten Stellgröße (y, $\underline{y}$) entsprechend einer kontinuierlichen Sollstellgröße ($\bar{y}^*$, $\underline{y}^*$) mittels eines Pulsmodulationsverfahrens, wobei in Abhängigkeit eines Schaltspiels (T), eines Zeitinkrements ($\delta t$), der Sollstellgröße ($\bar{y}^*$, $\underline{y}^*$) und eines Mittelwertes ($\bar{e}$) der Eingangsgröße (e) Zahlenwerte ($v, \alpha, \beta_1, \beta_2, \beta_3; \gamma_1, \gamma_2, \gamma_3; \chi, \gamma_i$) berechnet werden, die mittels zweier Taktsignale ($\tau$, tz) jeweils in einen Puls ($z_0$, $z_1; z_1, z_2, z_3$) gewandelt werden, mit deren Hilfe der Puls (q) bzw. die Pulse ($q_1, q_2$, $q_3$) der Stellgröße (y, $\underline{y}$) generiert wird bzw. werden, **dadurch gekennzeichnet,** daß zur Bestimmung der Zahlenwerte ($\alpha; \beta_1, \beta_2, \beta_3; \gamma_1, \gamma_2, \gamma_3; \chi, \gamma_i$), zu denen sich die Schaltzustände des Pulses (q) bzw. der Pulse ($q_1, q_2, q_3$) ändern, anstelle eines Zeitinkrements ($\delta t$) eine Einheits-Spannungszeitfläche ($\Delta$) verwendet wird, und daß zur Umsetzung dieser Zahlenwerte ($\alpha; \beta_1, \beta_2, \beta_3; \gamma_1, \gamma_2, \gamma_3; \chi, \gamma_i$) in einen Puls ($z_1$) bzw. in Pulse ($z_1, z_2, z_3$) das Taktsignal (tz) in Abhängigkeit einer Einheits-Spannungsfläche ($\Delta$) und einer Stell-größenzeitfläche verändert wird.

2. Verfahren zur Einstellung von Mittelwerten ($\bar{y}, \underline{\bar{y}}$) einer aus einer geschalteten Eingangsgröße (e) erzeugten Stellgröße (y, $\underline{y}$) entsprechend einer kontinuierlichen Sollstellgröße ($\bar{y}^*$, $\underline{y}^*$) mittels eines Pulsmodulationsverfahrens, wobei in Abhängigkeit eines Schaltspiels (T), eines Zeitinkrements ($\delta t$), der Sollstellgröße ($\bar{y}^*$, $\underline{y}^*$) und eines Mittelwertes ($\bar{e}$) der Eingangsgröße (e) Zahlenwerte ($v, \alpha, \beta_1, \beta_2, \beta_3; \gamma_1, \gamma_2, \gamma_3; \chi, \gamma_i$) berechnet werden, die mittels zweier Taktsignale ( , tz) jeweils in einen Puls ($z_0$, $z_1; z_1, z_2, z_3$) gewandelt werden, mit deren Hilfe der Puls (q) bzw. die Pulse ($q_1, q_2, q_3$) der Stellgröße (y,y) generiert wird bzw. werden, **dadurch gekennzeichnet,** daß zur Bestimmung der Zahlenwerte ($\alpha; \beta_1, \beta_2, \beta_3; \gamma_1, \gamma_2, \gamma_3; \chi, \gamma_i$), zu denen sich die Schaltzustände des Pulses (q) bzw. der Pulse ($q_1, q_2, q_3$) ändern, anstelle eines Zeitinkrements ($\delta t$) eine Einheits-Spannungszeitfläche ($\Delta$) verwendet wird, und daß zur Umsetzung dieser Zahlenwerte ($\alpha; \beta_1, \beta_2, \beta_3; \gamma_1, \gamma_2, \gamma_3; \chi, \gamma_i$) in einen Puls ($z_1$) bzw. in Pulse ($z_1, z_2, z_3$) das Taktsignal (tz) in Abhängigkeit einer Einheits-Spannungsfläche ($\Delta$) und einer Eingangsgrößenzeitfläche verändert wird.

3. Verfahren nach Anspruch 1 oder 2, **dadurch gekennzeichnet,** daß die Einheits-Spannungszeitfläche ($\Delta$) mittels einer Multiplikation einer Nenn-Eingangsgröße ($e_n$) und eines Zeitinkrements ($\delta p$) ermittelt wird, wobei das Zeitinkrement ($\delta p$) sehr viel kleiner ist als das Schaltspiel (T).

4. Verfahren nach Anspruch 3, **dadurch gekennzeichnet,** daß das Zeitinkrement ($\delta p$) einstellbar ist.

5. Vorrichtung zur Durchführung des Verfahrens nach Anspruch 1 mit einem Stellglied (4), an dessen Eingang eine Eingangsgröße (e) ansteht, und einer Pulsbreitensteuerung (2), bestehend aus einer Recheneinheit (12) und einem Schaltwerk, das wenigstens eine Zählereinheit (14,20,38,40) mit nachgeschaltetem Flip-Flop (16,42,44) enthält, wobei die Recheneinheit (12) in Abhängigkeit eines Schaltspiels (T), eines Zeitinkrements ($\delta t$), einer Sollstellgröße ($\bar{y}^*,\underline{y}^*$) und eines Mittelwertes ($\bar{e}$) der Eingangsgröße (e) Zahlenwerte ($v,\alpha,\beta_1,\beta_2,\beta_3;\gamma_1,\gamma_2,\gamma_3;\chi,\gamma_i$) berechnet, die mittels einer Zählereinheit (14,20,38,40) und zweier Taktsignale ($\tau$,tz) jeweils in einen Puls ($z_0,z_1;z_1,z_2,z_3$) gewandelt werden, aus denen mittels eines Flip-Flops (16,42,44) ein Puls (q) bzw. Pulse ($q_1,q_2,q_3$) der Stellgröße ($y,\underline{y}$) generiert werden, **dadurch gekennzeichnet**, daß der Recheneinheit (12) ne-ben den Eingangsgrößen Schaltspiel (T), Zeitinkrement ($\delta t$) und Sollstellgröße ($\bar{y}^*,\underline{y}^*$) auch noch eine Einheits-Spannungszeitfläche ($\Delta$) zugeführt ist und daß der Clock-Eingang (Cl) der Zählereinheit (14,38,40) mit einem Ausgang eines Taktgenerators (22) verknüpft ist, der in Abhängigkeit der schwankenden Stellgröße ($y,\underline{y}$) während eines Schaltspiels (T) und der Einheits-Spannungszeitfläche ($\Delta$) ein veränderbares Taktsignal (p) generiert.

6. Vorrichtung zur Durchführung des Verfahrens nach Anspruch 2 mit einem Stellglied (4), an dessem Eingang eine Eingangsgröße (e) ansteht, und einer Pulsbreitensteuerung (2), bestehend aus einer Recheneinheit (12) und einem Schaltwerk, das wenigstens eine Zählereinheit (14,20,38,40) mit nachgeschaltetem Flip-Flop (16,42,44) enthält, wobei die Recheneinheit (12) in Abhängigkeit eines Schaltspiels (T), eines Zeitinkrements ($\delta t$), einer Sollstellgröße ($\bar{y}^*,\underline{y}^*$) und eines Mittelwertes ($\bar{e}$) der Eingangsgröße (e) Zahlenwerte ($v,\alpha,\beta_1,\beta_2,\beta_3;\gamma_1,\gamma_2,\gamma_3;\chi,\gamma_i$) berechnet, die mittels einer Zählereinheit (14,20,38,40) und zweier Taktsignale ($\tau$,tz) jeweils in einen Puls ($z_0,z_1;z_1,z_2,z_3$) gewandelt werden, aus denen mittels eines Flip-Flops (16,42,44) ein Puls (q) bzw. Pulse ($q_1,q_2,q_3$) der Stellgröße ($y,\underline{y}$) generiert werden, **dadurch gekennzeichnet**, daß der Recheneinheit (12) neben den Eingangsgrößen Schaltspiel (T), Zeitinkrement ($\delta t$) und Sollstellgröße ($\bar{y}^*,\underline{y}^*$) auch noch eine Einheits-Spannungszeitfläche ($\Delta$) zugeführt ist und daß der Clock-Eingang (Cl) der Zählereinheit (14,38,40) und die Recheneinheit (12) jeweils mit einem Ausgang einer Funktionseinheit (34) verknüpft ist, wobei an einem Ausgang ein in Abhängigkeit der Schwankung der Eingangsgröße (e) des Stellgliedes (4) veränderbares Taktsignal (p) und am anderen Ausgang die Anzahl (E) der Pulse des Taktsignals (p) während eines Schaltspiels (T) anstehen.

7. Vorrichtung nach Anspruch 5, **dadurch gekennzeichnet**, daß der Taktgenerator (22) aus einem Integrator (24) mit nachgeschaltetem Komparator (30) besteht, wobei der Ausgang des Komparators (30) mit einem Kurzschließer (32) des Integrators (24) verknüpft ist und wobei am Integrator (24) die schwankende Stellgröße ($y,\underline{y}$) und am invertierenden Eingang des Komparators (30) die Einheits-Spannungszeitfläche ($\Delta$) anstehen.

8. Vorrichtung nach Anspruch 6, **dadurch gekennzeichnet**, daß die Funktionseinheit (34) aus einem Taktgenerator (22) mit einer nachgeschalteten Zähler- und Speichereinheit (36) besteht, wobei dieser Zähler- und Speichereinheit (36) ein Taktsignal ($\tau$) zugeführt ist.

9. Vorrichtung nach Anspruch 5 oder 8, **dadurch gekennzeichnet**, daß als Taktgenerator (22) zur Generierung des veränderbaren Taktsignals (p) ein Spannungs-Frequenz-Wandler vorgesehen ist.

## Claims

1. Method for setting mean values ($\bar{y}, \underline{y}$) of a manipulated variable ($y, \underline{y}$) generated from a switched input variable (e), corresponding to a continuous desired manipulated variable ($\bar{y}^*, \underline{y}^*$), by means of a pulse modulation method, wherein, in dependence upon an operating cycle (T), an increment in time ($\delta t$), the desired manipulated variable ($\bar{y}^*, \underline{y}^*$) and a mean value ($\bar{e}$) of the input variable (e), there are calculated numerical values ($v, \alpha, \beta_1, \beta_2, \beta_3; \gamma_1, \gamma_2, \gamma_3; \chi, \gamma_i$) which are respectively converted into a pulse ($z_0, z_1; z_1, z_2, z_3$) by means of two clock signals ($\tau$, tz) with the aid of which the pulse (q) or pulses ($q_1, q_2, q_3$) of the manipulated variable ($y, \underline{y}$) is or are generated, characterised in that, for determining the numerical values ($\alpha; \beta_1, \beta_2, \beta_3; \gamma_1, \gamma_2, \gamma_3; \chi, \gamma_i$) to which the switching states of the pulse (q) or pulses ($q_1, q_2, q_3$) change, a unit voltage time integral ($\Delta$) is used in place of an increment in time ($\delta t$), and in that, for converting these numerical values ($\alpha; \beta1, \beta_2, \beta_3; \gamma_1, \gamma_2, \gamma_3; \chi, \gamma_i$) into a pulse ($z_1$) or pulses ($z_1, z_2, z_3$), the clock signal (tz) is altered in dependence upon a unit voltage time integral ($\Delta$) and a manipulated variable time integral.

2. Method for setting mean values ($\bar{y}, \underline{y}$) of a manipulated variable ($y, \underline{y}$) generated from a switched input variable (e), corresponding to a continuous desired manipulated variable ($\bar{y}^*$, $\underline{\bar{y}}^*$), by means of a pulse modulation method, wherein, in dependence upon an operating cycle (T), an increment in time ($\delta t$), the desired manipulated variable ($\bar{y}^*$, $\underline{\bar{y}}^*$) and a mean value ($\bar{e}$) of the input variable (e), there are calculated numerical values ($v$, $\alpha$, $\beta_1$, $\beta_2$, $\beta_3$; $\gamma_1$, $\gamma_2$, $\gamma_3$; $\chi$, $\gamma_i$) which are respectively converted into a pulse ($z_0$, $z_1$; $z_1$, $z_2$, $z_3$) by means of two clock signals ($\tau$, tz) with the aid of which the pulse (q) or pulses ($q_1$, $q_2$, $q_3$) of the manipulated variable (y, $\underline{y}$) is or are generated, characterised in that, for determining the numerical values ($\alpha$; $\beta_1$, $\beta_2$, $\beta_3$; $\gamma_1$, $\gamma_2$, $\gamma_3$; $\chi$, $\gamma_i$) to which the switching states of the pulse (q) or pulses ($q_1$, $q_2$, $q_3$) change, a unit voltage time integral ($\Delta$) is used in place of an increment in time ($\delta t$), and in that, for converting these numerical values ($\alpha$; $\beta_1$, $\beta_2$, $\beta_3$; $\gamma_1$, $\gamma_2$, $\gamma_3$; $\chi$, $\gamma_i$) into a pulse ($z_1$) or pulses ($z_1$, $z_2$, $z_3$), the clock signal (tz) is altered in dependence upon a unit voltage time integral ($\Delta$) and an input variable time integral.

3. Method according to claim 1 or 2, characterised in that the unit voltage time integral ($\Delta$) is determined by means of a multiplication of a nominal input variable ($e_n$) and an increment in time ($\delta p$), wherein the increment in time ($\delta p$) is very much shorter than the operating cycle (T).

4. Method according to claim 3, characterised in that the increment in time ($\delta p$) can be adjusted.

5. Device for carrying out the method according to claim 1, having an actuating element (4) at whose input an input variable (e) is present, and having a pulse width control (2) comprising a central processor (12) and a switch mechanism which contains at least one counter unit (14, 20, 38, 40) having a flipflop (16, 42, 44) connected downstream, wherein, in dependence upon an operating cycle (T), an increment in time ($\delta t$), a desired manipulated variable ($\bar{y}^*$, $\underline{\bar{y}}^*$) and a mean value ($\bar{e}$) of the input variable (e), the central processor (12) calculates numerical values ($v$, $\alpha$; $\beta_1$, $\beta_2$, $\beta_3$; $\gamma_1$, $\gamma_2$, $\gamma_3$; $\chi$, $\gamma_i$) which are respectively converted by means of a counter unit (14, 20, 38, 40) and two clock signals ($\tau$, tz) into a pulse ($z_0$, $z_1$; $z_1$, $z_2$, $z_3$) from which a pulse (q) or pulses ($q_1$, $q_2$, $q_3$) of the manipulated variable (y, $\underline{y}$) are generated by means of a flipflop (16, 42, 44), characterised in that, besides the input variables comprised by the operating cycle (T), the increment in time ($\delta t$) and the desired manipulated variable ($\bar{y}^*$, $\underline{\bar{y}}^*$), a unit voltage time integral ($\Delta$) is also supplied to the central processor (12), and in that the clock input (Cl) of the counter unit (14, 38, 40) is linked to an output of a clock generator (22) which generates a variable clock signal (p) in dependence upon the varying manipulated variable (y, $\underline{y}$) during an operating cycle (T) and the unit voltage time integral ($\Delta$).

6. Device for carrying out the method according to claim 2, having an actuating element (4) at whose input an input variable (e) is present, and having a pulse width control (2) comprising a central processor (12) and a switch mechanism which contains at least one counter unit (14, 20, 38, 40) having a flipflop (16, 42, 44) connected downstream, wherein, in dependence upon an operating cycle (T), an increment in time ($\delta t$), a desired manipulated variable ($\bar{y}^*$, $\underline{\bar{y}}^*$) and a mean value ($\bar{e}$) of the input variable (e), the central processor (12) calculates numerical values ($v$, $\alpha$; $\beta_1$, $\beta_2$, $\beta_3$; $\gamma_1$, $\gamma_2$, $\gamma_3$; $\chi$, $\gamma_i$) which are respectively converted by means of a counter unit (14, 20, 38, 40) and two clock signals ($\tau$, tz) into a pulse ($z_0$, $z_1$; $z_1$, $z_2$, $z_3$) from which a pulse (q) or pulses ($q_1$, $q_2$, $q_3$) of the manipulated variable (y, $\underline{y}$) are generated by means of a flipflop (16, 42, 44), characterised in that, besides the input variables comprised by the operating cycle (T), the increment in time ($\delta t$) and the desired manipulated variable ($\bar{y}^*$, $\underline{\bar{y}}^*$), a unit voltage time integral ($\Delta$) is also supplied to the central processor (12), and in that the clock input (Cl) of the counter unit (14, 38, 40) and the central processor (12) is respectively linked to an output of a functional unit (34), wherein a clock signal (p) which can be altered in dependence upon the variation of the input variable (e) of the actuating element (4) is present at one output, and the number (E) of pulses of the clock signal (p) during an operating cycle (T) is present at the other output.

7. Device according to claim 5, characterised in that the clock generator (22) consists of an integrator (24) having a comparator (30) connected downstream, wherein the output of the comparator (30) is linked to a short-circuiting device (32) of the integrator (24), and wherein the varying manipulated variable (y, $\underline{y}$) is present at the integrator (24) and the unit voltage time integral ($\Delta$) is present at the inverting input of the comparator (30).

8. Device according to claim 6, characterised in that the functional unit (34) consists of a clock generator (22) having a counter-and-storage unit (36) connected downstream, wherein a clock signal ($\tau$) is supplied to this counter-and-storage unit (36).

9. Device according to claim 5 or 8, characterised in that a voltage-to-frequency converter is provided as the clock generator (22) for generating the variable clock signal (p).

**Revendications**

1. Procédé pour régler des valeurs moyennes $(\bar{y},\bar{\underline{y}})$ d'une grandeur de réglage $(y,\underline{y})$ produite à partir d'une grandeur d'entrée appliquée (e), conformément à une grandeur continue de réglage de consigne $(\bar{y}^*,\bar{\underline{y}}^*)$ au moyen d'un procédé de modulation d'impulsions, selon lequel en fonction d'une hystérésis (T), d'un incrément de temps $(\delta t)$, de la grandeur de réglage de consigne $(\bar{y}^*,\bar{\underline{y}}^*)$ et d'une valeur moyenne $(\bar{e})$ de la grandeur d'entrée (e) sont calculées des valeurs numériques $(\nu,\alpha,\beta_1,\beta_2,\beta_3;\ \gamma_1,\gamma_2,\gamma_3;\ \chi,\gamma_i)$, qui sont converties respectivement en une impulsion $(z_o,z_1;z_1,z_2,z_3)$, au moyen de deux signaux de cadence $(\tau,t_z)$, à l'aide desquels l'impulsion (q) ou les impulsions $(q_1,q_2,q_3)$ de la grandeur de réglage $(y,\underline{y})$ est ou sont produites, caractérisé par le fait que pour la détermination des valeurs numériques $(\alpha;\beta_1,\beta_2,\beta_3;\ \gamma_1,\gamma_2,\gamma_3;\ \chi,\gamma_i)$, pour lesquelles les états de commutation de l'impulsion (q) ou des impulsions $(q_1,q_2,q_3)$ varient, on utilise, à la place d'un incrément de temps $(\delta t)$, une intégrale normée $(\Delta)$ de tension sur le temps et que pour la conversion de ces valeurs numériques $(\alpha;\beta_1,\beta_2,\beta_3;\ \gamma_1,\gamma_2,\gamma_3;\ \chi,\gamma_i)$ en une impulsion $(z_1)$ ou en des impulsions $(z_1, z_2, z_3)$, on modifie le signal de cadence (tz) en fonction d'une intégrale normée $(\Delta)$ de tension et d'une intégrale de grandeur de réglage sur le temps.

2. Procédé pour régler des valeurs moyennes $(\bar{y},\bar{\underline{y}})$ d'une grandeur de réglage $(y,\underline{y})$ produite à partir d'une grandeur d'entrée appliquée (e), conformément à une grandeur continue de réglage de consigne $(\bar{y}^*,\bar{\underline{y}}^*)$ au moyen d'un procédé de modulation d'impulsions, selon lequel en fonction d'une hystérésis (T), d'un incrément de temps $(\delta t)$, de la grandeur de réglage de consigne $(\bar{y}^*,\bar{\underline{y}}^*)$ et d'une valeur moyenne $(\bar{e})$ de la grandeur d'entrée (e) sont calculées des valeurs numériques $(\nu,\alpha,\beta_1,\beta_2,\beta_3;\ \gamma_1,\gamma_2,\gamma_3;\ \chi,\gamma_i)$, qui sont converties respectivement en une impulsion $(z_o,z_1;z_1,z_2,z_3)$ au moyen de deux signaux de cadence $(\tau,tz)$, à l'aide desquels l'impulsion (q) ou les impulsions $(q_1,q_2,q_3)$ de la grandeur de réglage $(y,\underline{y})$ est ou sont produites, caractérisé par le fait que pour la détermination des valeurs numériques $(\alpha;\beta_1,\beta_2,\beta_3;\ \gamma_1,\gamma_2,\gamma_3;\ \chi,\gamma_i)$, pour lesquelles les états de commutation de l'impulsion (q) ou des impulsions $(q_1,q_2,q_3)$ varient, on utilise, à la place d'un incrément de temps $(\delta t)$, une intégrale normée $(\Delta)$ de tension sur le temps, et que pour la conversion de ces valeurs numériques $(\alpha;\beta_1,\beta_2,\beta_3;\ \gamma_1,\gamma_2,\gamma_3;\ \chi,\gamma_i)$ en une impulsion $(z_1)$ ou en des impulsions $(z_1, z_2,z_3)$, on modifie le signal de cadence (tz) en fonction d'une intégrale normée $(\Delta)$ de tension et d'une intégrale d'une grandeur d'entrée sur le temps.

3. Procédé suivant la revendication 1 ou 2, caractérisé par le fait que l'intégrale normée $(\Delta)$ de tension sur le temps est obtenue au moyen d'une multiplication d'une grandeur d'entrée nominale $(e_n)$ et d'un incrément de temps $(\delta p)$, l'incrément de temps $(\delta p)$ étant beaucoup plus petit que l'hystérésis (T).

4. Procédé suivant la revendication 3, caractérisé par le fait que l'incrément de temps $(\delta p)$ est réglable.

5. Dispositif pour la mise en oeuvre du procédé suivant la revendication 1, comportant un circuit de réglage (4), à l'entrée duquel est appliquée une grandeur d'entrée (e), et une unité (2) de commande des largeurs d'impulsions, constituée par une unité de calcul (12) et une unité de commutation, qui comporte au moins une unité de comptage (14, 20,38,40) en aval de laquelle est branchée une bascule bistable (16,42,44), et dans lequel l'unité de calcul (12) calcule, en fonction d'une hystérésis (T), d'un incrément de temps $(\delta t)$, une grandeur de réglage de consigne $(\bar{y}^*,\bar{\underline{y}}^*)$ et d'une valeur moyenne $(\bar{e})$ de la grandeur d'entrée (e), des valeurs numériques $(\nu,\alpha;\beta_1,\beta_2,\beta_3;\ \gamma_1,\gamma_2,\gamma_3;\ \chi,\gamma_i)$, qui sont converties respectivement en une impulsion $(z_0, z_1; z_1, z_2, z_3)$, au moyen d'une unité de comptage (14,20,38,40) et de deux signaux de cadence $(\tau, tz)$, à partir desquels une impulsion (q) ou des impulsions $(q_1,q_2,q_3)$ de la grandeur de réglage $(y,\underline{y})$ sont produites au moyen d'une bascule bistable (16,42,44), caractérisé par le fait qu'en dehors des grandeurs d'entrée que sont l'hystérésis (T), l'incrément de temps $(\delta t)$ et la grandeur de réglage de consigne $(\bar{y}^*,\bar{\underline{y}}^*)$, également une intégrale normée $(\Delta)$ de tension sur le temps est envoyée à l'unité de calcul (12), et que l'entrée d'horloge (C1) de l'unité de comptage (14,38,40) est reliée à une sortie d'un générateur de cadence (22), qui produit un signal de cadence variable (p), en fonction de la grandeur de réglage variable $(y,\underline{y})$ pendant une hystérésis (T) et de l'intégrale normée $(\Delta)$ de tension sur le temps.

6. Dispositif pour la mise en oeuvre du procédé suivant la revendication 2, comportant un circuit de réglage (4), à l'entrée duquel est appliquée une grandeur d'entrée (e), et une unité (2) de commande des largeurs d'impulsions, constitué par une unité de calcul (12) et une unité de commutation, qui contient au moins une unité de comptage (14, 20,38,40) en aval de laquelle est branchée une bascule bistable (16,42,44), et dans lequel l'unité de calcul (12) calcule, en fonction d'une hystérésis (T), d'un incrément de temps ($\delta$t), d'une grandeur de réglage de consign ($\overline{y^*y^*}$) et d'une valeur moyenne ($\overline{e}$) de la grandeur d'entrée (e), des valeurs numériques ($v,\alpha;\beta_1,\beta_2,\beta_3; \gamma_1,\gamma_2,\gamma_3; \chi,\gamma_i$), qui sont converties respectivement en une impulsion ($z_o,z_1;z_1,z_2,z_3$), au moyen d'une unité de comptage (14,20,38,40) et de deux signaux de cadence ($\tau$,tz), à partir desquels une impulsion (q) ou des impulsions ($q_1,q_2,q_3$) de la grandeur de réglage (y,$\underline{y}$) sont produites au moyen d'une bascule bistable (16,42,44), caractérisé par le fait qu'en dehors des grandeurs d'entrée que sont l'hystérésis (T), l'incrément de temps ($\delta$t) et la grandeur de réglage de consigne ($\overline{y^*},\overline{y^*}$), également une intégrale normée (A) de tension sur le temps est envoyée à l'unité de calcul (12), et que l'entrée d'horloge (C1) de l'unité de comptage (14,38,40) et l'unité de calcul (12) sont reliées à une sortie d' une unité fonctionnelle (34), un signal de cadence variable (p), qui est variable en fonction de la variation de la grandeur d'entrée (e) du circuit de réglage (4), étant présente sur une sortie, tandis que le nombre (E) des impulsions du signal de cadence (p) pendant une hystérésis (T) est présent sur l'autre sortie.

7. Dispositif suivant la revendication 5, caractérisé par le fait que le générateur de cadence (22) est constitué par un intégrateur (24) en aval duquel est branché un comparateur (30), la sortie du comparateur (30) étant reliée à un dispositif de court-circuit (32) de l'intégrateur (24), tandis que la grandeur de réglage variable (y,$\underline{y}$) est appliquée à l'intégrateur (24) et que l'intégrale normée de tension sur le temps ($\Delta$) est appliquée à l'entrée inverseuse du comparateur (30).

8. Dispositif suivant la revendication 6, caractérisé par le fait que l'unité fonctionnelle (34) est constituée par un générateur de cadence (22) comportant une unité de comptage et de mémoire (36) branchée en aval et à laquelle est envoyé un signal de cadence ($\tau$).

9. Dispositif suivant la revendication 5 ou 8, caractérisé par le fait qu'il est prévu, comme générateur de cadence (22) pour la production du signal de cadence variable (p), un convertisseur tension-fréquence.

FIG 1

τ

FIG 2

t

$z_1$

FIG 3

t

q

$T_A$

$T$

FIG 4

t

τ

FIG 6

t

$z_0$

FIG 7

t

$z_1$

FIG 8

t

q

$T_0$ $T_A$

$T$

FIG 9

t

FIG 5

**FIG 10**

**FIG 11**

**FIG 12**

FIG 13

FIG 14

EP 0 599 831 B1

FIG 16

FIG 15

19

FIG 17

FIG 18

τ

FIG 19

t

d

FIG 20

t

$z_1$

FIG 21

t

$z_2$

FIG 22

t

$z_3$

FIG 23

t

$q_1$

FIG 24

t

$q_2$

FIG 25

t

$q_3$

FIG 26

t

$T_1$

$T_2$

$T_3$

$T$

FIG 27

FIG 28

FIG 29

FIG 30

FIG 31

FIG 32

FIG 33

FIG 34

FIG 35

FIG 36

FIG 37

τ

FIG 38

t

d

FIG 39

t

$z_1$

FIG 40

t

$z_2$

FIG 41

t

$z_3$

FIG 42

t

$q_1$

FIG 43

t

$q_2$

FIG 44

t

$q_3$

FIG 45

t

$q_{11}$

FIG 46

t

$\beta_1$

$\beta_2$

$\beta_3$

T

FIG 47

FIG 48

FIG 49

FIG 50

FIG 51

FIG 52

FIG 53

FIG 54

FIG 55

FIG 56

FIG 57

FIG 58

FIG 59

FIG 60

FIG 61

FIG 62

FIG 63